# EUROPEAN PATENT APPLICATION

(11) **EP 4 265 354 A1**
(43) Date of publication of application: **25.10.2023**
(21) Application number: 23167236.1
(22) Date of filing: 10.04.2023
(51) Int. Cl.: B22F 1/102, B22F 10/25, C04B 35/52, C04B 35/628, C04B 41/00, C04B 41/45, C04B 41/83, B29C 64/165, C03B 19/00, C04B 35/584, C04B 35/622, C04B 35/532, C03C 25/328, D01F 11/14, C04B 111/00

(54) **POLYMER COATED PARTICULATE COMPOSITIONS AND RELATED METHODS AND APPLICATIONS**

(30) Priority: 21.04.2022 US 202217725721
(71) Applicant: Xerox Corporation, Webster, NY 14580 (US)
(72) Inventor: FARRUGIA, Valerie M., Oakville, L6H 7V8 (CA); HAWKINS, Michael S., Cambridge, N1S 3L5 (CA); LAWTON, David, Burlington, L7M 3N5 (CA)
(74) Representative: Grünecker Patent- und Rechtsanwälte PartG mbB

(57) **Abstract**

Polymer coated particulates may be produced by melt emulsification methods, for example, by mixing a mixture comprising: a carrier fluid, particulates, a thermoplastic polymer, and optionally an emulsion stabilizer at a temperature at or greater than a melting point or softening temperature of the thermoplastic polymer, wherein a mass ratio of the particulates to the thermoplastic polymer is about 1:0.1 to about 1:5; cooling the mixture to below the melting point or softening temperature to form polymer coated particulates; and separating the polymer coated particulates from the carrier fluid.

## Description

### FIELD OF INVENTION

The present disclosure relates to polymer coated particulates, methods of producing said polymer coated particulates, and applications of polymer coated particulates.

### BACKGROUND

Three-dimensional (3D) printing such as selective laser sintering (SLS) enables highly customizable objects to be rapidly fabricated by a layer-by-layer process. SLS printing enables short runs or low-mid scale low-cost manufacturing that are highly flexible in design but typically lack some properties required for industrial applications such as aerospace and automotive. These parts are usually functional or load-bearing and require high mechanical strength, thermal robustness and chemical resistance. Composite materials (e.g., carbon fiber composites (CFC)) are highly desirable in applications where lightweight materials are required but still can match the strength of most metals.

Carbon fiber reinforced particles have to be prepared for the SLS process by dissolving both the carbon fiber and polymer in an organic solvent to make a homogeneous solution. The organic solution is then evaporated from the solution leaving a powder composed of the CF and polymer. Unfortunately with this process the powder needs to be further crushed and milled before using in a SLS 3D printer.

Another process uses monodispersed polystyrene of about 3 microns in diameter to coat a carbon fiber of about 7 microns in diameter. The polystyrene is charged with an ozone charging system and coated on the surface of the grounded carbon fiber using a glass cyclone and a coating chamber. This powder coating process shows discrete layers of polystyrene particles stacked on top of each other coating the carbon fiber.

Also, commercially available materials for 3D printing include, for example, short fiber reinforced composites that are fabricated by dry mixing the carbon fiber with polyamide 12 powders where the printing material is about 30 wt% carbon fibers, about 1.76 g/cm³ density, and about 8 µm diameter and about 50 µm to 200 µm length fibers.

Melt mixing in combination with cryogenic milling methods are also used to prepare carbon nanofiber/polyamide 12 powders. Unfortunately the preparation of these materials is very challenging since many of these carbon fiber-reinforced polymers for SLS are simply mechanical mixing of the carbon fibers with a neat base polymer, which produces a heterogeneous dispersion of the carbon nanofibers through the polyamide 12. Then, upon cryomilling, resultant particles have different compositions as a result of the heterogenous dispersion and shapes and sizes as a result of cyromilling. The different particle shapes, sizes, and densities can cause coagulation and segregation during the layering of carbon nanofiber/polyamide 12 powders.

### SUMMARY OF INVENTION

The present disclosure relates to polymer coated particulates, methods of producing said polymer coated particulates, and applications of polymer coated particulates.

A nonlimiting example method of the present disclosure comprises: mixing a mixture comprising: a carrier fluid, particulates, a thermoplastic polymer, and optionally an emulsion stabilizer at a temperature at or greater than a melting point or softening temperature of the thermoplastic polymer, wherein a mass ratio of the particulates to the thermoplastic polymer is about 1:0.1 to about 1:5; cooling the mixture to below the melting point or softening temperature to form polymer coated particulates; and separating the polymer coated particulates from the carrier fluid.

Another nonlimiting example method of the present disclosure comprises: dispersing particulates in a first carrier fluid to yield a first dispersion; dispersing a thermoplastic polymer and optionally an emulsion stabilizer in a second carrier fluid at a temperature at or greater than a melting point or softening temperature of the thermoplastic polymer to yield a second dispersion; mixing the first and second dispersions to yield a mixture; cooling the mixture to below the melting point or softening temperature to form polymer coated particulates; and separating the polymer coated particulates from the first and second carrier fluid.

A nonlimiting example composition of the present disclosure comprises: a polymer coated particulate comprising the particulate having a thermoplastic polymer coating and an emulsion stabilizer coating at least a portion of a surface of the thermoplastic polymer coating.

Another nonlimiting example method of the present disclosure comprises: depositing polymer coated particulates of the above composition or produce by an above method and optionally polymer particles onto a surface; and once deposited, exposing at least a portion of the polymer coated particulates and polymer particles, when included, to a laser to fuse the polymer coated particulates and polymer particles, when included, and form a consolidated body.

### BRIEF DESCRIPTION OF THE DRAWINGS

The following figures are included to illustrate certain aspects of the disclosure, and should not be viewed as exclusive configurations. The subject matter disclosed is capable of considerable modifications, alterations, combinations, and equivalents in form and function, as will occur to those skilled in the art and having the benefit of this disclosure.
FIG. 1 is a flow chart of a nonlimiting example method 100 of the present disclosure.
FIGS. 2 and 3 shows optical micrographs for the ZOLTEK^{™} PX30 carbon fibers and Sample 2, respectively.
FIGS. 4-6 include scanning electron micrograph (SEM) images of the ZOLTEK^{™} PX30 carbon fiber raw material, Sample 1, and Sample 2 (sieved), respectively.
FIGS. 7A-B show optical images of a sintered single layer article at 12x and 160x magnifications, respectively.
FIG. 8A for an optical image and FIGS. 8B-C for SEM images of Sample 14 (polymer coated carbon fibers).
FIGS. 9 and 10 are the optical images of the copper fibers uncoated and coated, respectively.
FIGS. 11A-B and 12A-B are the SEM images of the copper fibers uncoated and coated, respectively.

### DETAILED DESCRIPTION

The present disclosure relates to polymer coated particulates, methods of producing said polymer coated particulates, and applications of polymer coated particulates. More specifically, a melt emulsification process for producing is disclosed for coating particulates with a thermoplastic polymer.

Advantageously, parameters like the amount of thermoplastic polymer in the preparation method, the ratio of thermoplastic polymer to particulates, and the use of and amount of, when used, emulsion stabilizers may be used for tailoring the coating thickness and an amount of polymer coated particulate agglomeration in the resultant product. Without being limited by theory it is believed that the melt emulsification approach provides a more homogeneous product with consistent coating thicknesses on particulates.

The resultant polymer coated particulates may be used alone or in combination with polymer powders for 3D printing material in, for example, SLS processes. Improved compositional homogeneity in the polymer coated particulates may increase the binding between polymer coated particulates and between polymer coated particulates and polymer powders and reduce defects in printed articles. Improved binding and decreased defects may provide further improved mechanical, electrical, and/or thermal properties beyond the benefits provided by the incorporation of the particulates.

The particulates may be chosen to impart desired properties to the polymer coated particulates and articles produced therefrom. For example, carbon fibers and/or carbon nanofibers may be used to increase thermal conductivity, improve flame retardancy, and improve heat resistance, or any combination thereof.

Additionally, some particulates (e.g., carbon fibers) may absorb laser power in the SLS printing process to produce heat, which may allow for lower laser power printing to achieve effective fusion.

### Definitions and Test Methods

Numerical ranges used herein include the numbers recited in the range. For example, the numerical range "from 1 wt% to 10 wt%" includes 1 wt% and 10 wt% within the recited range.

As used herein, the term "immiscible" refers to a mixture of components that, when combined, form two or more phases that have less than 5 wt% solubility in each other at ambient pressure and at room temperature or the melting point of the component if it is solid at room temperature. For example, polyethylene oxide having 10,000 g/mol molecular weight is a solid room temperature and has a melting point of 65°C. Therefore, said polyethylene oxide is immiscible with a material that is liquid at room temperature if said material and said polyethylene oxide have less than 5 wt% solubility in each other at 65°C.

A "polymer" has two or more of the same or different mer units. A "homopolymer" is a polymer having mer units that are the same. The term "polymer" as used herein includes, but is not limited to, homopolymers, copolymers, terpolymers, etc. The term "polymer" as used herein also includes impact, block, graft, random, and alternating copolymers. The term "polymer" shall further include all possible geometrical configurations unless otherwise specifically stated. Such configurations may include isotactic, syndiotactic, and random symmetries.

As used herein, the term "thermoplastic polymer" refers to a plastic polymer material that softens and hardens reversibly on heating and cooling. Thermoplastic polymers encompass thermoplastic elastomers.

As used herein, the term "elastomer" refers to a copolymer comprising a crystalline "hard" section and an amorphous "soft" section. In the case of a polyurethane, the crystalline section may include a portion of the polyurethane comprising the urethane functionality and optional chain extender group, and the soft section may include the polyol, for instance.

As used herein, the term "oxide" refers to both metal oxides and non-metal oxides. For purposes of the present disclosure, silicon is considered to be a metal.

An "olefin," alternatively referred to as "alkene," is a linear, branched, or cyclic compound of carbon and hydrogen having at least one double bond. Further, when a polymer is referred to as "comprising an olefin" or as a "polyolefin," the olefin present in the polymer is the polymerized form of the olefin.

As used herein, when a polymer is referred to as "comprising, consisting of, or consisting essentially of" a monomer, the monomer is present in the polymer in the polymerized form of the monomer or is the derivative form of the monomer. For example, when a copolymer is said to have an "ethylene" content of 35 wt % to 55 wt %, it is understood that the mer unit in the copolymer is derived from ethylene in the polymerization reaction and said derived units are present at 35 wt % to 55 wt %, based upon the weight of the copolymer.

As used herein, the term "embed" relative to particles (e.g., nanoparticles) and a surface of a polymer refers to the particle being at least partially extending into the surface of the polymer such that polymer is in contact with the nanoparticle to a greater degree than would be if the nanoparticle were simply laid on the surface of the polymer.

As used herein, the term "effective diameter" of a particulate refers to the diameter of the smallest sphere that wholly encompasses a particulate.

As used herein, the term "average diameter" refers to a diameter below which 50% (on a volume-based median average, unless otherwise specified) of the particulate population is found. As used herein, the term "average effective diameter" refers to the effective diameter below which 50% (on a volume-based median average of the spheres used to determine effective diameter, unless otherwise specified) of the particulate population is found.

Particle diameters, effective particle diameters, and particle size distributions are via microscopy. Depending on the dimensions of the particles, light microscopy (larger dimensions) or scanning electron microscopy (SEM) (smaller dimensions) may be used. In either instance, the particles should be dispersed on a substrate (e.g., glass slide for light microscopy and a substrate suitable to have contrast to the particles of SEM). A plurality of images should be taken so that a samples size of at least 1,000 particles is used to for determining the dimension characteristics of the particles.

As used herein, when referring to sieving, pore/screen sizes are described per U.S.A. Standard Sieve (ASTM E11-17).

As used herein, the term "shear" refers to stirring or a similar process that induces mechanical agitation in a fluid.

As used herein, the term "aspect ratio" refers to length divided by width, wherein the length is greater than the width, wherein length is the greatest diameter, and the width is the smallest diameter perpendicular to the length.

The melting point of a polymer, unless otherwise specified, is determined by ASTM E794-06(2018) with 10°C/min ramping and cooling rates.

The softening temperature or softening point of a polymer, unless otherwise specified, is determined by ASTM D6090-17. The softening temperature can be measured by using a cup and ball apparatus available from Mettler-Toledo using a 0.50 gram sample with a heating rate of 1°C/min.

The crystallization temperature is the temperature at which a polymer crystallizes (i.e., solidification) into a structured form, naturally or in an artificially initiated process, wherein atoms or molecules are highly organized into a crystal. The crystallization temperature may be measured by Differential Scanning Calorimetry (DSC). DSC provides a rapid method for determining polymer crystallinity based on the heat required to melt the polymer. The crystallization temperature (°C) is measured according to ASTM E794-06(2018) with 10°C/min ramping and cooling rates where the crystallization temperature is determined based on the second heating and cooling cycle.

The crystallinity (%) of a polymer, unless otherwise specified, is determined by ASTM D3418-15. For crystallinity calculations, a 100% crystalline TPU is considered to have an enthalpy of 196.8 J/g.

Mw is the weight-average molecular weight. Unless otherwise noted, Mw has units of g/mol or kDa (1,000 g/mol = 1 kDa) and is measured by gel permeation chromatography.

The melt flow index (MFI) is the measure of resistance to flow of polymer melt under defined set of conditions (unit: g/10 min) and is measured by ASTM 1238-20 Standard Procedure A at 195°C using a 2 mm orifice and a 2.16 kg load. Being a measure at low shear rate condition, MFI is inversely related to molecular weight of the polymer.

As used herein, "tensile modulus" (MPa) of a solid material is a mechanical property that measures its stiffness. It is defined as the ratio of its tensile stress (force per unit area) to its strain (relative deformation) when undergoing elastic deformation. It can be expressed in Pascals or pounds per square inch (psi). ASTM D638-14 can be used to determine tensile modulus of a polymer.

Angle of repose is a measure of the flowability of a powder. Angle of repose measurements were determined using a Hosokawa Micron Powder Characteristics Tester PT-R using ASTM D6393-14 "Standard Test Method for Bulk Solids Characterized by Carr Indices."

Aerated density (ρₐₑᵣ) is measured per ASTM D6393-14.

Bulk density (ρ_{bulk}) is measured per ASTM D6393-14.

Tapped density (ρₜₐₚ) is measured per ASTM D6393-14.

Hausner ratio (Hᵣ) is a measure of the flowability of a powder and is calculated by Hᵣ = ρₜₐₚ/ρ_{bulk}, where ρ_{bulk} is the bulk density per ASTM D6393-14 and ρₜₐₚ is the tapped density per ASTM D6393-14.

As used herein, viscosity of carrier fluids are the kinematic viscosity at 25°C, unless otherwise specified, measured per ASTM D445-19. For commercially procured carrier fluids (e.g., polydimethylsiloxane oil (PDMS)), the kinematic viscosity data cited herein was provided by the manufacturer, whether measured according to the foregoing ASTM or another standard measurement technique.

### Polymer Coated Particulates and Methods of Making

The compositions described herein may relate to polymer coated particulates. Further disclosed herein are methods of producing said polymer coated particulates using melt emulsification methods. For example, the present disclosure includes methods that comprise: mixing a mixture comprising: (a) a thermoplastic polymer(s), (b) particulates, (c) a carrier fluid that is immiscible with the thermoplastic polymer, and optionally (d) an emulsion stabilizer at a temperature greater than a melting point or softening temperature of each of the thermoplastic polymer(s) and at a shear rate sufficiently high to disperse the thermoplastic polymer in the carrier fluid; cooling the mixture to below the foregoing melting point or softening temperature to form polymer coated particulates; and separating the polymer coated particulates from the carrier fluid.

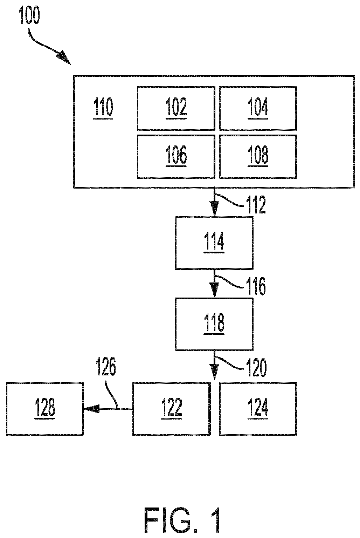

FIG. 1 is a flow chart of a nonlimiting example method 100 of the present disclosure. Thermoplastic polymer 102, particulates 104, carrier fluid 106, and optionally other additives 108 (e.g., an emulsion stabilizer, a compatibilizer, etc.) are combined to produce a mixture 110. The components 102, 104, 106, and 108 can be added individually or in a blend of components in any order and include mixing and/or heating during the process of combining the components 102, 104, 106, and 108. Further, at least a portion of combining may occur in a mixing apparatus used for the processing and/or another suitable vessel.

A first nonlimiting example of combining the components may include placing all of the components in a mixing apparatus (e.g., a blender, a mixer, an extruder, and the like); and mixing (optionally heating while mixing) the components.

A second nonlimiting example of combining the components may include dispersing particulates in a first carrier fluid to yield a first dispersion; dispersing a thermoplastic polymer and optionally an emulsion stabilizer in a second carrier fluid at a temperature at or greater than a melting point or softening temperature of the thermoplastic polymer to yield a second dispersion; and mixing the first and second dispersions to yield a mixture. The first and second carrier fluids may be the same or different compositions. Compositions may differ by chemical structure and/or viscosity. When using different compositions for the carrier fluids, said carrier fluids should be miscible. Other additives (e.g., an emulsion stabilizer, a compatibilizer, etc.) may be present in either dispersion. Preferably, a compatibilizer is present in the dispersion comprising the thermoplastic polymer. Preferably, the emulsion stabilizer is present in the dispersion comprising the thermoplastic polymer. In the foregoing second nonlimiting example and iterations thereof, the thermoplastic polymer may be present in the second dispersion as molten and/or softened thermoplastic polymer particles dispersed in the second carrier fluid.

A third nonlimiting example of combining may include dispersing the particulates in the carrier fluid to yield a dispersion; heating the dispersion to the temperature at or greater than a melting point or softening temperature of the thermoplastic polymer; and adding the thermoplastic polymer and optionally the other additives to the heated dispersion.

As used herein, a dispersion of particulates preferably includes at least about 75 wt% (or at least about 80 wt%, or at least about 85 wt%, or at least about 90 wt%) or of said particulates being dispersed as individual particulates, as small aggregates of about 20 or less particulates, or a combination thereof.

The particulates may be present in the mixture at about 5 wt% to about 60 wt% (or about 5 wt% to about 25 wt%, or about 10 wt% to about 30 wt%, or about 20 wt% to about 45 wt%, or about 25 wt% to about 50 wt%, or about 40 wt% to about 60 wt%) of the mixture.

The particulates may have a shape characterized as a sphere, an ellipsoid, a fiber, a polyhedron, an asteroid, a platelet, a flake, or a hybrid thereof.

The particulates may have an average effective diameter of about 5 µm or greater (or about 5 µm to about 500 µm, or about 5 µm to about 50 µm, or about 25 µm to about 100 µm, or about 50 µm to about 200 µm, or about 100 µm to about 300 µm, or about 250 µm to about 500 µm).

The particulates may have an average aspect ratio of about 1:1 to about 30:1 (or about 1:1 to about 5:1, or about 2:1 to about 10:1, or about 5:1 to about 20:1, or about 15:1 to about 30:1).

Examples of particulates may include, but are not limited to, carbon fibers, metal fibers (e.g., fibers comprising one or more of: copper, nickel, iron, steel, gold, silver, palladium, platinum, aluminum, or molybdenum), silicon nitride fibers, ceramic fibers, glass beads, hollow glass spheres, carbon flakes, the like, and any combination thereof.

A weight ratio of the particulates to the thermoplastic polymer present in the mixture may be about 1:0.1 to about 1:5 (or about 1:1 to about 1:2).

The other additives (e.g., an emulsion stabilizer, a compatibilizer, etc.) may be included in the mixture in an amount of about 0.01 wt% to about 10 wt% (or about 0.01 wt% to about 1 wt%, or about 0.1 wt% to about 3 wt%, or about 1 wt% to about 5 wt%, or about 5 wt% to about 10 wt%) based on a total weight of thermoplastic polymer in the mixture. For example, where emulsion stabilizers are used, the emulsion stabilizers may be present in the mixture in an amount of about 1 wt% to about 50 wt% (or about 1 wt% to about 10 wt%, or about 5 wt% to about 35 wt%, or about 10 wt% to about 25 wt%, or about 30 wt% to about 50 wt%) based on a total weight of thermoplastic polymer in the mixture. In another example, where compatibilizers are used, the compatibilizer may be present in the mixture in an amount of about 0.01 wt% to about 10 wt% (or about 0.01 wt% to about 1 wt%, or about 0.1 wt% to about 3 wt%, or about 1 wt% to about 5 wt%, or about 5 wt% to about 10 wt%) based on a total weight of thermoplastic polymer in the mixture.

Additional description regarding thermoplastic polymers, carrier fluids, and additives is provided further below.

Referring again to FIG. 1, the mixture 110 is then processed 112 (e.g., mixed) by applying sufficiently high shear to the mixture 110 at a temperature greater than the melting point or softening temperature of the polymer of the thermoplastic polymer 102. Without being limited by theory, it is believed that the foregoing process disperses (or keeps in dispersion) the particulates and allows the thermoplastic polymer melt to coat the particulates. The shear rate should be sufficient enough to disperse the polymer melt (e.g., comprising the thermoplastic polymer 102 and the compatibilizer, when present) and the particulates 104 in the carrier fluid 106. Then, the polymer melt may coat the particulates 104. In some instances, the polymer melt may coat the particulates as well as form spherical droplets not associated with a particulate. Emulsion stabilizer additives, when included, may preferentially locate at an interface between the polymer melt and the carrier fluid, whether the polymer melt is coating a particulate or not associated with a particulate.

The mixing apparatuses used for the processing 112 to produce a heated mixture 114 should be capable of maintaining the heated mixture 114 at a temperature greater than the necessary melting point or softening temperature of the polymer(s) in the mixture 110 (e.g., the one or more polymers of the thermoplastic polymer 102) described herein. The mixing apparatuses may also be capable applying a shear rate sufficient to disperse and/or maintain a dispersion of the particulates.

Examples of mixing apparatuses used for the processing to produce the heated mixture 114 may include, but are not limited to, extruders (e.g., continuous extruders, batch extruders, and the like), stirred reactors, blenders, reactors with inline homogenizer systems, the like, and apparatuses derived therefrom.

The processing 112 and forming the heated mixture 114 at suitable process conditions (e.g., temperature, shear rate, and the like) for a set period of time.

The temperature of the processing 112 and forming the heated mixture 114 should be a temperature greater than the necessary melting point or softening temperature of the polymer(s) in the mixture 112 described herein and less than the decomposition temperature of any components 102, 104, 106, 108 in the mixture. For example, the temperature of processing 112 and forming the heated mixture 114 may be about 1°C to about 50°C (or about 1°C to about 25°C, or about 5°C to about 30°C, or about 20°C to about 50°C) greater than the melting point or softening temperature of the polymer(s) in the mixture described herein provided the temperature of processing 112 and forming the heated mixture 114 is less than the decomposition temperature of any components 102, 104, 106, 108 in the mixture.

The time for maintaining said temperature and shear rate for processing 112 and forming the heated mixture 114 may be 10 seconds to 18 hours or longer (or 10 seconds to 30 minutes, or 5 minutes to 1 hour, or 15 minutes to 2 hours, or 1 hour to 6 hours, or 3 hours to 18 hours).

The heated mixture 114 inside and/or outside the mixing vessel may then be cooled 116 to solidify the polymer melt portion of the heated mixture 114. Cooling 112 can be slow (e.g., allowing the polymer melt to cool under ambient conditions) to fast (e.g., quenching). For example, the rate of cooling may range from about 10°C/hour to about 100°C/second to almost instantaneous with quenching (for example in dry ice) (or about 10°C/hour to about 60°C/hour, or about 0.5°C/minute to about 20°C/minute, or about 1°C/minute to about 5°C/minute, or about 10°C/minute to about 60°C/minute, or about 0.5°C/second to about 10°C/second, or about 10°C/second to about 100°C/second).

During cooling 116, little to no shear may be applied to the heated mixture 114.

The cooled mixture 118 resulting from cooling 116 the heated mixture 114 may comprise polymer coated particulates and other components (e.g., the carrier fluid, excess emulsion stabilizer, excess other additives, and the like). In some instances, if polymer melt droplets not associated with particulates in the heated mixture 114 are formed, then the cooled mixture 118 may further comprise solidified polymer particles. The cooled mixture 118 can then be treated 120 to isolate the polymer coated particulates 122 and solidified polymer particles, if present, from other components 124 (e.g., the carrier fluid 106, excess emulsion stabilizer, excess other additives, and the like). The polymer coated particulates 122 in the cooled mixture 118 may be dispersed in the carrier fluid and/or settled in the carrier fluid. Examples of isolation treatment may include, but are not limited to, filtration, centrifugation, decanting, and the like, and any combination thereof.

Depending on the separation technique and degree of aggregation between the polymer coated particulates 122 and the solidified polymer particles (when formed), the solidified polymer particles may also be separated from the polymer coated particulates 122. For example, if the polymer coated particulates 122 and the solidified polymer particles are separately dispersed, filtration techniques may be able to remove a substantial amount (e.g., about 50 wt% or greater, or about 70 wt% or greater) of the solidified polymer particles present after cooling. In another example, if the polymer coated particulates 122 and the solidified polymer particles are separately dispersed and the particulates of the polymer coated particulates 122 have a density greater than (preferably at least 0.5 g/cm³ greater than) the thermoplastic polymer of the solidified polymer particles, centrifugation techniques may be useful in removing a substantial amount (e.g., about 50 wt% or greater, or about 70 wt% or greater) of the solidified polymer particles present after cooling.

The polymer coated particulates 122 comprise the thermoplastic polymer 102, the particulates 104, and the other additives 108 (e.g., an emulsion stabilizer, a compatibilizer, etc.), when included.

The polymer coated particulates 122 may optionally be further purified or otherwise treated 126 to yield purified polymer coated particulates 128. Suitable treatments include, but are not limited to, washing, filtering, centrifuging, decanting, the like, and any combination thereof.

Solvents used for washing the polymer coated particulates 122 should generally be (a) miscible with the carrier fluid and (b) nonreactive (e.g., non-swelling and non-dissolving) with the polymer(s) of the polymer coated particulates. Examples of solvents include, but are not limited to, hydrocarbon solvents (e.g., pentane, hexane, heptane, octane, cyclohexane, cyclopentane, decane, dodecane, tridecane, and tetradecane), aromatic hydrocarbon solvents (e.g., benzene, toluene, xylene, 2-methyl naphthalene, and cresol), ether solvents (e.g., diethyl ether, tetrahydrofuran, diisopropyl ether, and dioxane), ketone solvents (e.g., acetone and methyl ethyl ketone), alcohol solvents (e.g., methanol, ethanol, isopropanol, and n-propanol), ester solvents (e.g., ethyl acetate, methyl acetate, butyl acetate, butyl propionate, and butyl butyrate), halogenated solvents (e.g., chloroform, bromoform, 1,2-dichloromethane, 1,2-dichloroethane, carbon tetrachloride, chlorobenzene, and hexafluoroisopropanol), water, the like, and any combination thereof.

Solvent may be removed from the polymer coated particulates 128 by drying using an appropriate method such as air-drying, heat-drying, reduced pressure drying, freeze drying, or a hybrid thereof. The heating may be performed preferably at a temperature lower than the glass transition point of the polymer (e.g., about 50°C to about 150°C).

Advantageously, carrier fluids and washing solvents of the systems and methods described herein can be recycled and reused. One skilled in the art will recognize any necessary cleaning of used carrier fluid and solvent necessary in the recycling process.

In another purification 126 example, to narrow the particle size distribution (or reduce the diameter span), the polymer coated particulates 122 can be passed through a sieve having a pore size of about 10 µm to about 250 µm (or about 10 µm to about 100 µm, or about 50 µm to about 200 µm, or about 150 µm to about 250 µm).

In another example, the polymer coated particulates 122 may be washed with water to remove surfactant emulsion stabilizers while maintaining substantially all of the nanoparticle emulsion stabilizers associated with the surface of the polymer coated particulates 122. In yet another example purification technique, the polymer coated particulates 122 may be blended with additives to achieve a desired final product. For clarity, because such additives are blended with the polymer coated particulates described herein after the polymer has solidified, such additives are referred to herein as "external additives." Examples of external additives include flow aids, other polymer coated particulates, polymer particles, fillers, the like, and any combination thereof.

In some instances, a surfactant emulsion stabilizer used in making the polymer coated particulates 122 may be unwanted in downstream applications. Accordingly, yet another example purification technique 126 may include at least substantial removal of the surfactant from the polymer coated particulates 122 (e.g., by washing and/or pyrolysis).

The polymer coated particulates 122 and/or purified polymer coated particulates 128 may be characterized by composition, physical structure, and the like.

The polymer coating of the polymer coated particulates (as produced or purified) may be about 5 nm to about 250 nm (or about 5 nm to about 25 nm, or about 10 nm to about 50 nm, or about 25 nm to about 150 nm, or about 100 nm to about 250 nm).

The polymer coated particulates (as produced or purified) may have a BET surface area of about 0.5 m²/g to about 500 m²/g (or about 0.5 m²/g to about 10 m²/g, or about 5 m²/g to about 50 m²/g, or about 10 m²/g to about 150 m²/g, or about 25 m²/g to about 100 m²/g, or about 100 m²/g to about 250 m²/g, or about 250 m²/g to about 500 m²/g).

The polymer coated particulates (as produced or purified) may have an angle of repose of about 10° to about 45° (or about 10° to about 30°, or about 25° to about 35°, or about 30° to about 40°, or about 35° to about 45°).

The polymer coated particulates (as produced or purified) may have a Hausner ratio of about 1.0 to about 1.5 (or about 1.0 to about 1.2, or about 1.1 to about 1.3, or about 1.2 to about 1.35, or about 1.3 to about 1.5).

The polymer coated particulates (as produced or purified) may have a density of about 0.5 g/cm³ to about 10 g/cm³ (or about 0.5 g/cm³ to about 3 g/cm³, or about 1 g/cm³ to about 5 g/cm³, or about 3 g/cm³ to about 7 g/cm³, or about 5 g/cm³ to about 10 g/cm³). The density may be similar to the density of the uncoated particles.

The polymer coated particulates (as produced or purified) may have a bulk density of about 0.3 g/cm³ to about 0.8 g/cm³ (or about 0.3 g/cm³ to about 0.6 g/cm³, or about 0.4 g/cm³ to about 0.7 g/cm³, or about 0.5 g/cm³ to about 0.6 g/cm³, or about 0.5 g/cm³ to about 0.8 g/cm³).

The polymer coated particulates (as produced or purified) may have an aerated density of about 0.5 g/cm³ to about 0.8 g/cm³ (or about 0.5 g/cm³ to about 0.7 g/cm³, or about 0.55 g/cm³ to about 0.80 g/cm³).

The polymer coated particulates (as produced or purified) may have a tapped density of about 0.6 g/cm³ to about 0.9 g/cm³ (or about 0.60 g/cm³ to about 0.75 g/cm³, or about 0.65 g/cm³ to about 0.80 g/cm³, or about 0.70 g/cm³ to about 0.90 g/cm³).

The thermoplastic polymer of the coating may have a sintering window that is within 10°C, preferably within 5°C, of the sintering window of the thermoplastic polymer or blend thereof used in the mixture.

The thermoplastic polymer may be present in the polymer coated particulates (as produced or purified) at about 5 wt% to about 85 wt% (or about 5 wt% to about 30 wt%, or about 10 wt% to about 50 wt%, or about 25 wt% to about 75 wt%, or about 50 wt% to about 85 wt%) of the polymer coated particulates.

The emulsion stabilizer may be present in the polymer coated particulates (as produced or purified) in an amount of an amount of about 0.1 wt% to about 50 wt% (or about 0.1 wt% to about 5 wt%, or about 1 wt% to about 10 wt%, or about 5 wt% to about 35 wt%, or about 10 wt% to about 25 wt%, or about 30 wt% to about 50 wt%) based on a total weight of thermoplastic polymer in the polymer coated particulates.

### Thermoplastic Polymers, Carrier Fluids, and Additives

Examples of said thermoplastic polymers may include, but are not limited to, thermoplastic polyolefins, polyamides, polyurethanes, polyacetals, polycarbonates, polybutylene terephthalate (PBT), polyethylene terephthalate (PET), polyethylene naphthalate (PEN), polytrimethylene terephthalate (PTT), ethylene vinyl acetate copolymer (EVA), polyhexamethylene terephthalate, polystyrenes, polyvinyl chlorides, polytetrafluoroethenes, polyesters (e.g., polylactic acid), polyethers, polyether sulfones, polyetherether ketones, polyacrylates, polymethacrylates, polyimides, acrylonitrile butadiene styrene (ABS), polyphenylene sulfides, vinyl polymers, polyarylene ethers, polyarylene sulfides, polysulfones, polyether ketones, polyamide-imides, polyetherimides, polyetheresters, copolymers comprising a polyether block and a polyamide block (PEBA or polyether block amide), functionalized or nonfunctionalized ethylene/vinyl monomer polymer, functionalized or nonfunctionalized ethylene/alkyl (meth)acrylates, functionalized or nonfunctionalized (meth)acrylic acid polymers, functionalized or nonfunctionalized ethylene/vinyl monomer/alkyl (meth)acrylate terpolymers, ethylene/vinyl monomer/carbonyl terpolymers, ethylene/alkyl (meth)acrylate/carbonyl terpolymers, methylmethacrylate-butadiene-styrene (MBS)-type core-shell polymers, polystyrene-block-polybutadiene-block-poly(methyl methacrylate) (SBM) block terpolymers, chlorinated or chlorosulphonated polyethylenes, polyvinylidene fluoride (PVDF), phenolic resins, poly(ethylene/vinyl acetate), polybutadienes, polyisoprenes, styrenic block copolymers, polyacrylonitriles, silicones, the like, and any combination thereof. Copolymers comprising one or more of the foregoing may also be used in the methods and systems of the present disclosure. In some cases, copolymers of PE with polar monomers, such as poly(ethylene-co-vinyl acetate), poly(ethylene-co-methyl acrylate), poly(ethylene-co-glycidyl methacrylate), and poly(ethylene-co-vinyl alcohol) may improve compatibility in polyethylene-poly(methylmethacrylate) (PE/PMMA) blends.

The thermoplastic polymers in the compositions and methods of the present disclosure may be elastomeric or non-elastomeric. Some of the foregoing examples of thermoplastic polymers may be elastomeric or non-elastomeric depending on the exact composition of the polymer.

Thermoplastic elastomers generally fall within one of six classes: styrenic block copolymers, thermoplastic vulcanizates (also referred to as elastomeric alloys), thermoplastic polyurethanes, thermoplastic copolyesters, and thermoplastic polyamides (typically block copolymers comprising polyamide). Examples of thermoplastic elastomers can be found in Handbook of Thermoplastic Elastomers, 2nd ed., B. M. Walker and C. P. Rader, eds., Van Nostrand Reinhold, New York, 1988. Examples of thermoplastic elastomers include, but are not limited to, elastomeric polyamides, polyurethanes, copolymers comprising a polyether block and a polyamide block (PEBA or polyether block amide), methyl methacrylate-butadiene-styrene (MBS)-type core-shell polymers, polystyrene-block-polybutadiene-block-poly(methyl methacrylate) (SBM) block terpolymers, polybutadienes, polyisoprenes, styrenic block copolymers, and polyacrylonitriles), silicones, and the like. Elastomeric styrenic block copolymers may include at least one block selected from the group of: isoprene, isobutylene, butylene, ethylene/butylene, ethylene-propylene, and ethylene-ethylene/propylene. More specific elastomeric styrenic block copolymer examples include, but are not limited to, poly(styrene-ethylene/butylene), poly(styrene-ethylene/butylene-styrene), polystyrene-ethylene/propylene), styrene-ethylene/propylene-styrene), poly(styrene-ethylene/propylene-styrene-ethylene-propylene), poly(styrene-butadiene-styrene), poly(styrene-butylene-butadiene-styrene), the like, and any combination thereof.

Examples of polyamides include, but are not limited to, polycaproamide (nylon 6, polyamide 6, or PA6), poly(hexamethylene succinamide) (nylon 4,6, polyamide 4,6, or PA4,6), polyhexamethylene adipamide (nylon 6,6, polyamide 6,6, or PA6,6), polypentamethylene adipamide (nylon 5,6, polyamide 5,6, or PA5,6), polyhexamethylene sebacamide (nylon 6,10, polyamide 6,10, or PA6,10), polyundecaamide (nylon 11, polyamide 11, or PA11), polydodecaamide (nylon 12, polyamide 12, or PA12), and polyhexamethylene terephthalamide (nylon 6T, polyamide 6T, or PA6T), nylon 10,10 (polyamide 10,10 or PA10,10), nylon 10,12 (polyamide 10,12 or PA10,12), nylon 10,14 (polyamide 10,14 or PA10,14), nylon 10,18 (polyamide 10,18 or PA10,18), nylon 6,18 (polyamide 6,18 or PA6,18), nylon 6,12 (polyamide 6,12 or PA6,12), nylon 6,14 (polyamide 6,14 or PA6,14), nylon 12,12 (polyamide 12,12 or PA12,12), the like, and any combination thereof. Copolyamides may also be used. Examples of copolyamides include, but are not limited to, PA 11/10,10, PA 6/11, PA 6,6/6, PA 11/12, PA 10,10/10,12, PA 10,10/10,14, PA 11/10,36, PA 11/6,36, PA 10,10/10,36, PA 6T/6,6, the like, and any combination thereof. A polyamide followed by a first number comma second number is a polyamide having the first number of backbone carbons between the nitrogens for the section having no pendent =O and the second number of backbone carbons being between the two nitrogens for the section having the pendent =O. By way of nonlimiting example, nylon 6,10 is [NH-(CH₂)₆-NH-CO-(CH₂)₈-CO]ₙ. A polyamide followed by number(s) backslash number(s) are a copolymer of the polyamides indicated by the numbers before and after the backslash.

Examples of polyurethanes include, but are not limited to, polyether polyurethanes, polyester polyurethanes, mixed polyether and polyester polyurethanes, the like, and any combination thereof. Examples of thermoplastic polyurethanes include, but are not limited to, poly[4,4'-methylenebis(phenylisocyanate)-alt-1,4-butanediol/di(propylene glycol)/polycaprolactone], ELASTOLLAN^{®} 1190A (a polyether polyurethane elastomer, available from BASF), ELASTOLLAN^{®} 1190A10 (a polyether polyurethane elastomer, available from BASF), the like, and any combination thereof.

Polyolefins may be polymers of one or more monomers that may include, but are not limited to, substituted or unsubstituted C₂ to C₄₀ alpha olefins, preferably C₂ to C₂₀ alpha olefins, preferably C₂ to C₁₂ alpha olefins, preferably ethylene, propylene, butene, pentene, hexene, heptene, octene, nonene, decene, undecene, dodecane, and isomers thereof. For example, the polyolefin may comprise propylene and an optional comonomers comprising one or more ethylene or C₄ to C₄₀ olefins, preferably C₄ to C₂₀ olefins, or preferably C₆ to C₁₂ olefins. The C₄ to C₄₀ olefin monomers may be linear, branched, or cyclic. The C₄ to C₄₀ cyclic olefins may be strained or unstrained, monocyclic or polycyclic, and may optionally include heteroatoms and/or one or more functional groups. In another example, the polyolefin may comprise ethylene and an optional comonomers comprising one or more C₃ to C₄₀ olefins, preferably C₄ to C₂₀ olefins, or preferably C₆ to C₁₂ olefins. The C₃ to C₄₀ olefin monomers may be linear, branched, or cyclic. The C₃ to C₄₀ cyclic olefins may be strained or unstrained, monocyclic or polycyclic, and may optionally include heteroatoms and/or one or more functional groups.

Examples of C₂ to C₄₀ olefins may include, but are not limited to, ethylene, propylene, butene, pentene, hexene, heptene, octene, nonene, decene, undecene, dodecene, norbornene, norbornadiene, dicyclopentadiene, cyclopentene, cycloheptene, cyclooctene, cyclooctadiene, cyclododecene, 7-oxanorbornene, 7-oxanorbomadiene, substituted derivatives thereof, and isomers thereof, preferably hexene, heptene, octene, nonene, decene, dodecene, cyclooctene, 1,5-cyclooctadiene, 1-hydroxy-4-cyclooctene, 1-acetoxy-4-cyclooctene, 5-methylcyclopentene, cyclopentene, dicyclopentadiene, norbornene, norbornadiene, and their respective homologs and derivatives, preferably norbornene, norbornadiene, and dicyclopentadiene.

Examples of specific polyolefins may include, but are not limited to, polyethylene (as a homopolymer or a copolymer having 35 wt% or less of a C₂ to C₄₀ alpha olefin comonomer), polypropylene (as a homopolymer or a copolymer having 35 wt% or less of a C₄ to C₄₀ alpha olefin comonomer), ethylene-propylene copolymers, ethylene-propylene-diene copolymers, polybutene, polyisobutylene, polymethylpentene, poly (4-methyl-1-pentene), the like, and any combination thereof.

The thermoplastic polymer may have a melting point or softening temperature of about 50°C to about 450°C (or about 50°C to about 125°C, or about 100°C to about 175°C, or about 150°C to about 280°C, or about 200°C to about 350°C, or about 300°C to about 450°C).

The thermoplastic polymer may have a glass transition temperature (ASTM E1356-08(2014) with 10°C/min ramping and cooling rates) of about -50°C to about 400°C (or about -50°C to about 0°C, or about -25°C to about 50°C, or about 0°C to about 150°C, or about 100°C to about 250°C, or about 150°C to about 300°C, or about 200°C to about 400°C).

The thermoplastic polymer may optionally comprise an additive. Typically, the additive would be present before addition of said polymers to the mixture. Therefore, in the polymer melt and resultant polymer coated particulates, the additive is dispersed throughout the thermoplastic polymer. Accordingly, for clarity, this additive is referred to herein as an "internal additive." The internal additive may be blended with the said polymer just prior to making the mixture or well in advance.

When describing component amounts in the compositions described herein (e.g., the mixture and the resultant polymer coated particulates), a weight percent based on the polymer not inclusive of the internal additive. For example, a composition comprising 1 wt% of emulsion stabilizer by weight of 100 g of a polymer comprising 10 wt% internal additive and 90 wt% polymer is a composition comprising 0.9 g of emulsion stabilizer, 90 g of polymer, and 10 g of internal additive.

The internal additive may be present in the thermoplastic polymer at about 0.1 wt% to about 60 wt% (or about 0.1 wt% to about 5 wt%, or about 1 wt% to about 10 wt%, or about 5 wt% to about 20 wt%, or about 10 wt% to about 30 wt%, or about 25 wt% to about 50 wt%, or about 40 wt% to about 60 wt%) of the thermoplastic polymer. For example, the thermoplastic polymer may comprise about 70 wt% to about 85 wt% of a thermoplastic polymer and about 15 wt% to about 30 wt% of an internal additive like glass fiber or carbon fiber.

Examples of internal additives include, but are not limited to, fillers, strengtheners, pigments, pH regulators, the like, and combinations thereof. Examples of fillers include, but are not limited to, glass fibers, glass particles, mineral fibers, carbon fiber, oxide particles (e.g., titanium dioxide and zirconium dioxide), metal particles (e.g., aluminum powder), the like, and any combination thereof. Examples of pigments include, but are not limited to, organic pigments, inorganic pigments, carbon black, the like, and any combination thereof. For example, fillers used herein may include exfoliated graphite (EG), exfoliated graphite nanoplatelets (xGnP), carbon black, carbon nanofibers (CNF), carbon nanotubes (CNT), graphenes, graphene oxides, graphite oxides, graphene oxide nanosheets, and/or fullerenes.

The carrier fluid should be chosen such that at the various processing temperatures (e.g., from room temperature to process temperature) the thermoplastic polymer and the carrier fluid are immiscible. An additional factor that may be considered is the differences in (e.g., a difference or a ratio of) viscosity at process temperature between the thermoplastic polymer and the carrier fluid. The differences in viscosity may affect droplet breakup and particle size distribution. Without being limited by theory, it is believed that when the viscosities of the thermoplastic polymer and the carrier fluid are too similar, the circularity of the product as a whole may be reduced where the particles are more ovular and more elongated structures are observed.

Suitable carrier fluids may have a viscosity at 25°C of about 1,000 cSt to about 150,000 cSt (or about 1,000 cSt to about 60,000 cSt, or about 40,000 cSt to about 100,000 cSt, or about 75,000 cSt to about 150,000 cSt). For example, suitable carrier fluids may have a viscosity at 25°C of about 10,000 cSt to about 60,000 cSt.

Examples of carrier fluids may include, but are not limited to, silicone oil, fluorinated silicone oils, perfluorinated silicone oils, polyethylene glycols, alkyl-terminal polyethylene glycols (e.g., C1-C4 terminal alkyl groups like tetraethylene glycol dimethyl ether (TDG)), paraffins, liquid petroleum jelly, vison oils, turtle oils, soya bean oils, perhydrosqualene, sweet almond oils, calophyllum oils, palm oils, parleam oils, grapeseed oils, sesame oils, maize oils, rapeseed oils, sunflower oils, cottonseed oils, apricot oils, castor oils, avocado oils, jojoba oils, olive oils, cereal germ oils, esters of lanolic acid, esters of oleic acid, esters of lauric acid, esters of stearic acid, fatty esters, higher fatty acids, fatty alcohols, polysiloxanes modified with fatty acids, polysiloxanes modified with fatty alcohols, polysiloxanes modified with polyoxy alkylenes, the like, and any combination thereof. Examples of silicone oils include, but are not limited to, polydimethylsiloxane (PDMS), methylphenylpolysiloxane, an alkyl modified polydimethylsiloxane, an alkyl modified methylphenylpolysiloxane, an amino modified polydimethylsiloxane, an amino modified methylphenylpolysiloxane, a fluorine modified polydimethylsiloxane, a fluorine modified methylphenylpolysiloxane, a polyether modified polydimethylsiloxane, a polyether modified methylphenylpolysiloxane, the like, and any combination thereof. When the carrier fluid comprises two or more of the foregoing, the carrier fluid may have one or more phases. For example, polysiloxanes modified with fatty acids and polysiloxanes modified with fatty alcohols (preferably with similar chain lengths for the fatty acids and fatty alcohols) may form a single-phase carrier fluid. In another example, a carrier fluid comprising a silicone oil and an alkyl-terminal polyethylene glycol may form a two-phase carrier fluid. In at least one embodiment, the carrier fluid is polydimethylsiloxane (PDMS).

The carrier fluid may be present in the mixture at about 40 wt% to about 95 wt% (or about 75 wt% to about 95 wt%, or about 70 wt% to about 90 wt%, or about 55 wt% to about 80 wt%, or about 50 wt% to about 75 wt%, or about 40 wt% to about 60 wt%) of the mixture.

In some instances, the carrier fluid may have a density of about 0.6 g/cm³ to about 1.5 g/cm³, and the thermoplastic polymer may have a density of about 0.7 g/cm³ to about 1.7 g/cm³, wherein the thermoplastic polymer may have a density similar, lower, or higher than the density of the carrier fluid.

Other additives like emulsion stabilizers, thermoplastic polymers, compatibilizers, the like, and any combination thereof may be included in the mixture and resultant polymer coated particulates.

The emulsion stabilizers used in the methods and compositions of the present disclosure may comprise nanoparticles (e.g. oxide nanoparticles, carbon black, polymer nanoparticles, and combinations thereof), surfactants, the like, and any combination thereof.

Oxide nanoparticles may be metal oxide nanoparticles, non-metal oxide nanoparticles, or mixtures thereof. Examples of oxide nanoparticles include, but are not limited to, silica, titania, zirconia, alumina, iron oxide, copper oxide, tin oxide, boron oxide, cerium oxide, thallium oxide, tungsten oxide, the like, and any combination thereof. Mixed metal oxides and/or non-metal oxides, like aluminosilicates, borosilicates, and aluminoborosilicates, are also inclusive in the term metal oxide. The oxide nanoparticles may by hydrophilic or hydrophobic, which may be native to the particle or a result of surface treatment of the particle. For example, a silica nanoparticle having a hydrophobic surface treatment, like dimethyl silyl, trimethyl silyl, or the like, may be used in methods and compositions of the present disclosure. Additionally, silica with functional surface treatments like methacrylate functionalities may be used in methods and compositions of the present disclosure. Unfunctionalized oxide nanoparticles may also be suitable for use as well.

Commercially available examples of silica nanoparticles include, but are not limited to, AEROSIL^{®} particles available from Evonik (e.g., AEROSIL^{®} R812S (about 7 nm average diameter silica nanoparticles having a hydrophobically modified surface and a BET surface area of 260±30 m²/g), AEROSIL^{®} RX50 (about 40 nm average diameter silica nanoparticles having a hydrophobically modified surface and a BET surface area of 35±10 m²/g), AEROSIL^{®} 380 (silica nanoparticles having a hydrophilically modified surface and a BET surface area of 380±30 m²/g), the like, and any combination thereof.

Carbon black is another type of nanoparticle that may be present as an emulsion stabilizer in the compositions and methods disclosed herein. Various grades of carbon black will be familiar to one having ordinary skill in the art, any of which may be used herein. Other nanoparticles capable of absorbing infrared radiation may be used similarly.

Polymer nanoparticles are another type of nanoparticle that may be present as an emulsion stabilizer in the disclosure herein. Suitable polymer nanoparticles may include one or more polymers that are thermosetting and/or crosslinked, such that they do not melt when processed by melt emulsification according to the disclosure herein. High molecular weight thermoplastic polymers having high melting or decomposition points may similarly comprise suitable polymer nanoparticle emulsion stabilizers.

Surfactants may be anionic, cationic, nonionic, or zwitterionic. Examples of surfactants include, but are not limited to, sodium dodecyl sulfate, sorbitan oleates, poly[dimethylsiloxane-co-[3-(2-(2-hydroxyethoxy)ethoxy)propylmethylsiloxane]], docusate sodium (sodium 1,4-bis(2-ethylhexoxy)-1,4-dioxobutane-2-sulfonate), the like, and any combination thereof. Commercially available examples of surfactants include, but are not limited to, CALFAX^{®} DB-45 (sodium dodecyl diphenyl oxide disulfonate, available from Pilot Chemicals), SPAN^{®} 80 (sorbitan maleate non-ionic surfactant), MERPOL^{®} surfactants (available from Stepan Company), TERGITOL^{™} TMN-6 (a water-soluble, nonionic surfactant, available from DOW), TRITON^{™} X-100 (octyl phenol ethoxylate, available from SigmaAldrich), IGEPAL^{®} CA-520 (polyoxyethylene (5) isooctylphenyl ether, available from SigmaAldrich), BRIJ^{®} S10 (polyethylene glycol octadecyl ether, available from SigmaAldrich), the like, and any combination thereof.

Surfactants may be included in the mixture (e.g., mixture 112 of FIG. 1) or the polymer coated particulates (e.g., polymer coated particulates 122/128 of FIG. 1) in an amount of about 0.01 wt% to about 10 wt% (or about 0.01 wt% to about 1 wt%, or about 0.5 wt% to about 2 wt%, or about 1 wt% to about 3 wt%, or about 2 wt% to about 5 wt%, or about 5 wt% to about 10 wt%) based on a total weight of thermoplastic polymer in the mixture or thermoplastic polymer in the polymer particles. Alternatively, the mixture may comprise no (or be absent of) surfactant.

A weight ratio of nanoparticles to surfactant in the emulsion stabilizer in the mixture (e.g., mixture 112 of FIG. 1) or the polymer coated particulates (e.g., polymer coated particulates 122/128 of FIG. 1) may be about 1:10 to about 10:1 (or about 1:10 to about 1:1, or about 1:5 to about 5:1, or about 1:1 to about 10:1).

The emulsion stabilizers may be at the interface between the polymer melt and the carrier fluid in the heated mixture. As a result, when the mixture is cooled, the emulsion stabilizers remain at, or in the vicinity of, said interface. Therefore, the structure of the polymer coated particulates, in general when emulsion stabilizers are used, includes emulsion stabilizers (a) dispersed on an outer surface of the polymer coated particulates (e.g., dispersed on the thermoplastic polymer coating of the polymer coated particulates) and/or (b) embedded in an outer portion (e.g., outer 1 vol%) of the polymer coated particulates (e.g., embedded in the thermoplastics polymer coating of the polymer coated particulates). That is, emulsion stabilizers, when included, may be present as coating, perhaps a uniform coating, on the thermoplastic polymer coating of the polymer coated particulates. In some instances, which may be dependent upon nonlimiting factors such as the temperature (including cooling rate), the type of thermoplastic polymer, and the types and sizes of emulsion stabilizers, the nanoparticle emulsion stabilizers may become at least partially embedded within the thermoplastic polymer coating of the polymer coated particulates. Even without embedment taking place, at least a portion of the nanoparticle emulsion stabilizers may remain robustly associated with the thermoplastic polymer coating of the polymer coated particulates to facilitate their further use. In contrast, dry blending already-formed polymer particulates (e.g., formed by cryogenic grinding or precipitation processes) with a flow aid like silica nanoparticles does not result in a robust, uniform coating of the flow aid upon the polymer coated particulates.

At least a portion of the surfactant, if used as an emulsion stabilizer alone or in combination with a nanoparticle emulsion stabilizer, may be associated with the outer surface (e.g., thermoplastic polymer coating of the polymer coated particulates) as well. The coating of the emulsion stabilizer (e.g., comprising surfactants and/or nanoparticles) may be disposed substantially uniformly upon the outer surface. As used herein with respect to a coating, the term "substantially uniform" refers to even coating thickness in surface locations covered by the coating composition (e.g., nanoparticles and/or surfactant), particularly the entirety of the outer surface. The emulsion stabilizers may form a coating that covers at least 5% (or about 5% to about 100%, or about 5% to about 25%, or about 20% to about 50%, or about 40% to about 70%, or about 50% to about 80%, or about 60% to about 90%, or about 70% to about 100%) of the surface area of the polymer coated particulates. When purified to at least substantially remove surfactant or another emulsion stabilizer, the emulsion stabilizers may be present on an outer surface of the polymer coated particulates at less than 25% (or 0% to about 25%, or about 0.1% to about 5%, or about 0.1% to about 1%, or about 1% to about 5%, or about 1% to about 10%, or about 5% to about 15%, or about 10% to about 25%) of the surface area of the polymer coated particulates. The coverage of the emulsion stabilizers on an outer surface of the polymer coated particulates may be determined using image analysis of the scanning electron microscope images (SEM micrographs). The emulsion stabilizers may form a coating that covers at least 5% (or about 5% to about 100%, or about 5% to about 25%, or about 20% to about 50%, or about 40% to about 70%, or about 50% to about 80%, or about 60% to about 90%, or about 70% to about 100%) of the surface area of the polymer coated particulates. When purified to at least substantially remove surfactant or another emulsion stabilizer, the emulsion stabilizers may be present on an outer surface of the polymer coated particulates at less than 25% (or 0% to about 25%, or about 0.1% to about 5%, or about 0.1% to about 1%, or about 1% to about 5%, or about 1% to about 10%, or about 5% to about 15%, or about 10% to about 25%) of the surface area of the polymer coated particulates. The coverage of the emulsion stabilizers on an outer surface of the polymer coated particulates may be determined using image analysis of the SEM micrographs.

Compatibilizers may optionally be used to improve the blending efficiency and efficacy when two or more thermoplastic polymers are used. Examples of polymer compatibilizers include, but not limited to, PROPOLDER^{™} MPP2020 20 (polypropylene, available from Polygroup Inc.), PROPOLDER^{™} MPP2040 40 (polypropylene, available from Polygroup Inc.), NOVACOM^{™} HFS2100 (maleic anhydride functionalized high density polyethylene polymer, available from Polygroup Inc.), KEN-REACT^{™} CAPS^{™} L^{™} 12/L (organometallic coupling agent, available from Kenrich Petrochemicals), KEN-REACT^{™} CAPOW^{™} L^{™} 12/H (organometallic coupling agent, available from Kenrich Petrochemicals), KEN-REACT^{™} LICA^{™} 12 (organometallic coupling agent, available from Kenrich Petrochemicals), KEN-REACT^{™} CAPS^{™} KPR^{™} 12/LV (organometallic coupling agent, available from Kenrich Petrochemicals), KEN-REACT^{™} CAPOW^{™} KPR^{™} 12/H (organometallic coupling agent, available from Kenrich Petrochemicals), KEN-REACT^{™} titanates & zirconates (organometallic coupling agent, available from Kenrich Petrochemicals), VISTAMAXX^{™} (ethylene-propylene copolymers, available from ExxonMobil), SANTOPRENE^{™} (thermoplastic vulcanizate of ethylene-propylene-diene rubber and polypropylene, available from ExxonMobil), VISTALON^{™} (ethylene-propylene-diene rubber, available from ExxonMobil), EXACT^{™} (plastomers, available from ExxonMobil) EXXELOR^{™} (polymer resin, available from ExxonMobil), FUSABOND^{™} M603 (random ethylene copolymer, available from Dow), FUSABOND^{™} E226 (anhydride modified polyethylene, available from Dow), BYNEL^{™} 41E710 (coextrudable adhesive resin, available from Dow), SURLYN^{™} 1650 (ionomer resin, available from Dow), FUSABOND^{™} P353 (a chemically modified polypropylene copolymer, available from Dow), ELVALOY^{™} PTW (ethylene terpolymer, available from Dow), ELVALOY^{™} 3427AC (a copolymer of ethylene and butyl acrylate, available from Dow), LOTADER^{™} AX8840 (ethylene acrylate-based terpolymer, available from Arkema), LOTADER^{™} 3210 (ethylene acrylate-based terpolymer, available from Arkema), LOTADER^{™} 3410 (ethylene acrylate-based terpolymer, available from Arkema), LOTADER^{™} 3430 (ethylene acrylate-based terpolymer, available from Arkema), LOTADER^{™} 4700 (ethylene acrylate-based terpolymer, available from Arkema), LOTADER^{™} AX8900 (ethylene acrylate-based terpolymer, available from Arkema), LOTADER^{™} 4720 (ethylene acrylate-based terpolymer, available from Arkema), BAXXODUR^{™} EC 301 (amine for epoxy, available from BASF), BAXXODUR^{™} EC 311 (amine for epoxy, available from BASF), BAXXODUR^{™} EC 303 (amine for epoxy, available from BASF), BAXXODUR^{™} EC 280 (amine for epoxy, available from BASF), BAXXODUR^{™} EC 201 (amine for epoxy, available from BASF), BAXXODUR^{™} EC 130 (amine for epoxy, available from BASF), BAXXODUR^{™} EC 110 (amine for epoxy, available from BASF), styrenics, polypropylene, polyamides, polycarbonate, EASTMAN^{™} G-3003 (a maleic anhydride grafted polypropylene, available from Eastman), RETAIN^{™} (polymer modifier available from Dow), AMPLIFY TY^{™} (maleic anhydride grafted polymer, available from Dow), INTUNE^{™} (olefin block copolymer, available from Dow), and the like and any combination thereof.

In another example, where compatibilizers are used, the compatibilizer may be present in the mixture in an amount of about 0.01 wt% to about 10 wt% (or about 0.01 wt% to about 1 wt%, or about 0.1 wt% to about 3 wt%, or about 1 wt% to about 5 wt%, or about 5 wt% to about 10 wt%) based on a total weight of thermoplastic polymer in the polymer coated particulates.

### Applications of Polymer Coated Particulates

The present disclosure also includes methods of selective laser sintering where the method may comprise: depositing (a) polymer coated particulates described herein and optionally (b) thermoplastic polymer particles onto a surface; and once deposited, exposing at least a portion of the particles (a) and (b) (if included) to a laser to fuse the particles (a) and (b) (if included) and form a consolidated body.

The polymer coated particulates described herein optionally in conjunction with the thermoplastic polymer particles may be used to produce a variety of articles. By way of nonlimiting example, 3-D printing processes of the present disclosure may comprise: depositing particles (e.g., the foregoing particles (a) and (b) (if included)) described herein upon a surface (e.g., in layers and/or in a specified shape), and once deposited, heating at least a portion of the particles to promote consolidation thereof and form a consolidated body (or object). For example, heating and consolidation of the polymer coated particulates described herein optionally in conjunction with the thermoplastic polymer particles may take place in a 3-D printing apparatus employing a laser, such that heating and consolidation take place by selective laser sintering.

Examples of articles that may be produced by such methods where polymer coated particulates described herein optionally in conjunction with the thermoplastic polymer particles may be used to form all or a portion of said articles include, but are not limited to, particles, films, packaging, toys, household goods, automotive parts, aerospace/aircraft-related parts, containers (e.g., for food, beverages, cosmetics, personal care compositions, medicine, and the like), shoe soles, furniture parts, decorative home goods, plastic gears, screws, nuts, bolts, cable ties, jewelry, art, sculpture, medical items, prosthetics, orthopedic implants, production of artifacts that aid learning in education, 3D anatomy models to aid in surgeries, robotics, biomedical devices (orthotics), home appliances, dentistry, electronics, sporting goods, and the like. Further, particles may be useful in applications that include, but are not limited to, paints, powder coatings, inkjet materials, electrophotographic toners, 3D printing, and the like.

Further, the polymer coated particulates described herein optionally in conjunction with the thermoplastic polymer particles may be used in applications beyond additive manufacturing. For example, the polymer coated particulates described herein optionally in conjunction with the thermoplastic polymer particles may be used as delivery systems for various chemicals (e.g., pesticides, nutrients, and the like) in agriculture technologies. Similarly, cosmetics and biomedical applications may utilize these potential delivery systems.

In another example, the polymer coated particulates described herein optionally in conjunction with the thermoplastic polymer particles may be used in barrier coatings. The barrier coatings may be useful for paper and packaging materials.

In additional examples, the polymer coated particulates described herein optionally in conjunction with the thermoplastic polymer particles may be used in adhesives, low-grade fuel, light-weight materials, batteries (e.g., in the cathode and/or anode material), electrodes (e.g., in electrode fabrication with complex geometries for electrochemical applications), and wound dressings.

Depending on the particulates, the particulates may impart one or more of the following properties to the objects produced from and/or end-use applications in which the polymer coated particulates described are implemented.

### Example Embodiments

Embodiment A: A method comprising: mixing a mixture comprising: a carrier fluid, particulates, a thermoplastic polymer, and optionally an emulsion stabilizer at a temperature at or greater than a melting point or softening temperature of the thermoplastic polymer, wherein a mass ratio of the particulates to the thermoplastic polymer is about 1:0.1 to about 1:5; cooling the mixture to below the melting point or softening temperature to form polymer coated particulates; and separating the polymer coated particulates from the carrier fluid. One or more of the following may be included in Embodiment A: Element 1: wherein the mass ratio of the particulates to the thermoplastic polymer is about 1:1 to about 1:2; Element 2: wherein at least some of the particulates have an average effective diameter of about 5 µm or greater; Element 3: wherein at least some of the particulates have an aspect ratio of about 1:1 to about 30:1; Element 4: wherein a shape of at least some of the particulates is characterized as a sphere, an ellipsoid, a fiber, a polyhedron, an asteroid, a platelet, a flake, or a hybrid thereof; Element 5: the particulates comprise one or more of: a carbon fiber, a metal fiber, a silicon nitride fiber, a ceramic fiber, a glass bead, a hollow glass sphere, a carbon flake, or any combination thereof; Element 6: the method further comprising: dispersing the particulates in a first portion of the carrier fluid to yield a first dispersion; dispersing a polymer melt comprising the thermoplastic polymer in a second portion of the carrier fluid to yield a second dispersion; and mixing the first and second dispersions; Element 7: Element 6 and wherein the second dispersion further comprise the emulsion stabilizer; Element 8: the method further comprising: dispersing the particulates in the carrier fluid to yield a dispersion; heating the dispersion to the temperature at or greater than a melting point or softening temperature of the thermoplastic polymer; and adding the thermoplastic polymer and optionally the emulsion stabilizers to the heated dispersion; Element 9: wherein the polymer coated particulates have a density of 1.50 to 1.70 g/cm³; Element 10: wherein the emulsion stabilizer is present in the mixture, and wherein the emulsion stabilizer is present in the mixture is about 1 wt% to about 50 wt% based on a total weight of the thermoplastic polymer in the mixture; Element 11: Element 10 and wherein the emulsion stabilizer comprises metal oxide particles; Element 12: wherein the thermoplastic polymer comprises one or more of: a thermoplastic polyolefin, a polyamide, a polyurethane, a polyacetal, a polycarbonate, polybutylene terephthalate (PBT), polyethylene terephthalate (PET), polyethylene naphthalate (PEN), polytrimethylene terephthalate (PTT), ethylene vinyl acetate copolymer (EVA), polyhexamethylene terephthalate, a polystyrene, a polyvinyl chloride, a polytetrafluoroethene, a polyester (e.g., polylactic acid), a polyether, a polyether sulfone, a polyetherether ketone, a polyacrylate, a polymethacrylate, a polyimide, acrylonitrile butadiene styrene (ABS), a polyphenylene sulfide, a vinyl polymer, a polyarylene ether, a polyarylene sulfide, a polysulfone, a polyether ketone, a polyamide-imide, a polyetherimide, a polyetherester, a copolymer comprising a polyether block and a polyamide block (PEBA or polyether block amide), a functionalized or nonfunctionalized ethylene/vinyl monomer polymer, a functionalized or nonfunctionalized ethylene/alkyl (meth)acrylate, a functionalized or nonfunctionalized (meth)acrylic acid polymer, a functionalized or nonfunctionalized ethylene/vinyl monomer/alkyl (meth)acrylate terpolymer, an ethylene/vinyl monomer/carbonyl terpolymer, an ethylene/alkyl (meth)acrylate/carbonyl terpolymer, a methylmethacrylate-butadiene-styrene (MBS)-type core-shell polymer, a polystyrene-block-polybutadiene-block-poly(methyl methacrylate) (SBM) block terpolymer, a chlorinated or chlorosulphonated polyethylene, polyvinylidene fluoride (PVDF), a phenolic resin, poly(ethylene/vinyl acetate), a polybutadiene, a polyisoprene, a styrenic block copolymer, a polyacrylonitrile, and a silicone; Element 13: wherein the thermoplastic polymer comprises polyamide (e.g., PA12, PA6, PA11, or any combination thereof); Element 14: wherein the thermoplastic polymer comprises polyolefin (e.g., polyethylene, polypropylene, or any combination thereof); Element 15: wherein the thermoplastic polymer comprises polyethylene terephthalate; Element 16: wherein the thermoplastic polymer comprises polymethylmethacrylate; Element 17: wherein the thermoplastic polymer comprises aromatic polyamide; Element 18: wherein the thermoplastic polymer comprises polystyrene; Element 19: wherein the thermoplastic polymer comprises polycarbonate; Element 20: wherein the thermoplastic polymer comprises polyurethane; Element 21: wherein the polymer coated particulates have an angle of repose of about 10° to about 45°; and Element 22: wherein the polymer particles have a BET surface area of about 0.5 m²/g to about 500 m²/g. Examples of combination may include, but are not limited to, Element 1 in combination with one or more of Element 2-22; Element 2 in combination with one or more of Element 3-22; Element 3 in combination with one or more of Element 4-22; Element 4 in combination with one or more of Element 5-22; Element 5 in combination with one or more of Element 6-22. Element 6 (optionally in combination with Element 7) in combination with one or more of Element 9-22; Element 8 in combination with one or more of Element 9-22; Element 9 in combination with one or more of Element 2-22; Element 10 (optionally in combination with Element 11) in combination with one or more of Element 12-22; one or more of Elements 12-20 in combination with one or more of Element 21-22; and Elements 21-22 in combination.

Embodiment B: A method comprising: dispersing particulates in a first carrier fluid to yield a first dispersion; dispersing a thermoplastic polymer and optionally an emulsion stabilizer in a second carrier fluid at a temperature at or greater than a melting point or softening temperature of the thermoplastic polymer to yield a second dispersion; mixing the first and second dispersions to yield a mixture; cooling the mixture to below the melting point or softening temperature to form polymer coated particulates; and separating the polymer coated particulates from the first and second carrier fluid. One or more of the following may be included in Embodiment B: Element 1; Element 2; Element 3; Element 4; Element 5; Element 9; Element 10; Element 11; Element 12; Element 13; Element 14; Element 15; Element 16; Element 17; Element 18; Element 19; Element 20; Element 21; and Element 22. Examples of combination may include, but are not limited to, one or more of Elements 1-5 in combination with one or more of Elements 9-22; two or more of Elements 1-5 in combination; and two or more of Elements 9-22 in combination.

Embodiment C: A composition comprising: a polymer coated particulate comprising the particulate having a thermoplastic polymer coating and an emulsion stabilizer coating at least a portion of a surface of the thermoplastic polymer coating. One or more of the following may be included in Embodiment B: Element 1; Element 2; Element 3; Element 4; Element 5; Element 9; Element 10; Element 11; Element 12; Element 13; Element 14; Element 15; Element 16; Element 17; Element 18; Element 19; Element 20; Element 21; Element 22; Element 23: wherein at least some of the emulsion stabilizer is embedded in the thermoplastic polymer coating; Element 24: wherein the thermoplastic polymer coating has a thickness of about 0.01 µm to about 10 µm; Element 25: wherein a weight ratio of the thermoplastic polymer to the particulates in the polymer coated particulate is about 1:0.1 to about 1:5; Element 26: wherein a weight ratio of the thermoplastic polymer to the emulsion stabilizer in the polymer coated particulate is about 2:1 to about 20:1; and Element 27: wherein the emulsion stabilizer comprises metal oxide particles. Examples of combination may include, but are not limited to, one or more of Elements 1-5 in combination with one or more of Elements 9-27; two or more of Elements 1-5 in combination; and two or more of Elements 9-27 in combination.

Embodiment D: A method comprising: depositing polymer coated particulates of Embodiment C (optionally including one or more of Elements 1-5 and 9-27) and optionally polymer particles onto a surface; and once deposited, exposing at least a portion of the polymer coated particulates and polymer particles, when included, to a laser to fuse the polymer coated particulates and polymer particles, when included, and form a consolidated body. The consolidated body may have a void percentage of about 5% or less.

### Clauses

Clause 1. A method comprising: mixing a mixture comprising: a carrier fluid, particulates, a thermoplastic polymer, and optionally an emulsion stabilizer at a temperature at or greater than a melting point or softening temperature of the thermoplastic polymer, wherein a mass ratio of the particulates to the thermoplastic polymer is about 1:0.1 to about 1:5; cooling the mixture to below the melting point or softening temperature to form polymer coated particulates; and separating the polymer coated particulates from the carrier fluid.
Clause 2. The method of Clause 1, wherein the mass ratio of the particulates to the thermoplastic polymer is about 1:1 to about 1:2.
Clause 3. The method of Clause 1, wherein at least some of the particulates have an average effective diameter of about 5 µm or greater.
Clause 4. The method of Clause 1, wherein at least some of the particulates have an aspect ratio of about 1:1 to about 30:1.
Clause 5. The method of Clause 1, wherein a shape of at least some of the particulates is characterized as a sphere, an ellipsoid, a fiber, a polyhedron, an asteroid, a platelet, a flake, or a hybrid thereof.
Clause 6. The method of Clause 1, the particulates comprise one or more of: a carbon fiber, a metal fiber, a silicon nitride fiber, a ceramic fiber, a glass bead, a hollow glass sphere, a carbon flake, or any combination thereof.
Clause 7. The method of Clause 1 further comprising: dispersing the particulates in a first portion of the carrier fluid to yield a first dispersion; dispersing a polymer melt comprising the thermoplastic polymer in a second portion of the carrier fluid to yield a second dispersion; and mixing the first and second dispersions.
Clause 8. The method of Clause 7, wherein the second dispersion further comprises the emulsion stabilizer.
Clause 9. The method of Clause 1 further comprising: dispersing the particulates in the carrier fluid to yield a dispersion; heating the dispersion to the temperature at or greater than a melting point or softening temperature of the thermoplastic polymer; and adding the thermoplastic polymer and optionally the emulsion stabilizers to the heated dispersion.
Clause 10. The method of Clause 1, wherein the polymer coated particulates have a density of 1.50 to 1.70 g/cm³.
Clause 11. The method of Clause 1, wherein the emulsion stabilizer is present in the mixture, and wherein the emulsion stabilizer is present in the mixture is about 1 wt% to about 50 wt% based on a total weight of the thermoplastic polymer in the mixture.
Clause 12. The method of Clause 11, wherein the emulsion stabilizer comprises metal oxide particles.
Clause 13. The method of Clause 1, wherein the thermoplastic polymer comprises one or more of: a thermoplastic polyolefin, a polyamide, a polyurethane, a polyacetal, a polycarbonate, polybutylene terephthalate (PBT), polyethylene terephthalate (PET), polyethylene naphthalate (PEN), polytrimethylene terephthalate (PTT), ethylene vinyl acetate copolymer (EVA), polyhexamethylene terephthalate, a polystyrene, a polyvinyl chloride, a polytetrafluoroethene, a polyester (e.g., polylactic acid), a polyether, a polyether sulfone, a polyetherether ketone, a polyacrylate, a polymethacrylate, a polyimide, acrylonitrile butadiene styrene (ABS), a polyphenylene sulfide, a vinyl polymer, a polyarylene ether, a polyarylene sulfide, a polysulfone, a polyether ketone, a polyamide-imide, a polyetherimide, a polyetherester, a copolymer comprising a polyether block and a polyamide block (PEBA or polyether block amide), a functionalized or nonfunctionalized ethylene/vinyl monomer polymer, a functionalized or nonfunctionalized ethylene/alkyl (meth)acrylate, a functionalized or nonfunctionalized (meth)acrylic acid polymer, a functionalized or nonfunctionalized ethylene/vinyl monomer/alkyl (meth)acrylate terpolymer, an ethylene/vinyl monomer/carbonyl terpolymer, an ethylene/alkyl (meth)acrylate/carbonyl terpolymer, a methylmethacrylate-butadiene-styrene (MBS)-type core-shell polymer, a polystyrene-block-polybutadiene-block-poly(methyl methacrylate) (SBM) block terpolymer, a chlorinated or chlorosulphonated polyethylene, polyvinylidene fluoride (PVDF), a phenolic resin, poly(ethylene/vinyl acetate), a polybutadiene, a polyisoprene, a styrenic block copolymer, a polyacrylonitrile, and a silicone.
Clause 14. The method of Clause 1, wherein the thermoplastic polymer comprises polyamide (e.g., PA12, PA6, PA11, or any combination thereof).
Clause 15. The method of Clause 1, wherein the thermoplastic polymer comprises polyolefin (e.g., polyethylene, polypropylene, or any combination thereof).
Clause 16. The method of Clause 1, wherein the thermoplastic polymer comprises polyethylene terephthalate.
Clause 17. The method of Clause 1, wherein the thermoplastic polymer comprises polymethylmethacrylate.
Clause 18. The method of Clause 1, wherein the thermoplastic polymer comprises aromatic polyamide.
Clause 19. The method of Clause 1, wherein the thermoplastic polymer comprises polystyrene.
Clause 20. The method of Clause 1, wherein the thermoplastic polymer comprises polycarbonate.
Clause 21. The method of Clause 1, wherein the thermoplastic polymer comprises polyurethane.
Clause 22. The method of Clause 1, wherein the polymer coated particulates have an angle of repose of about 10° to about 45°.
Clause 23. The method of Clause 1, wherein the polymer particles have a BET surface area of about 0.5 m²/g to about 500 m²/g.
Clause 24. A method comprising: dispersing particulates in a first carrier fluid to yield a first dispersion; dispersing a thermoplastic polymer and optionally an emulsion stabilizer in a second carrier fluid at a temperature at or greater than a melting point or softening temperature of the thermoplastic polymer to yield a second dispersion; mixing the first and second dispersions to yield a mixture; cooling the mixture to below the melting point or softening temperature to form polymer coated particulates; and separating the polymer coated particulates from the first and second carrier fluid.
Clause 25. The method of Clause 24, wherein the thermoplastic polymer of the second dispersion is present in the second dispersion as a molten and/or softened thermoplastic polymer particle dispersed in the second carrier fluid.
Clause 26. The method of Clause 24, wherein the second dispersion is produced before the first dispersion.
Clause 27. The method of Clause 24, wherein the first and second carrier fluids are different and miscible.
Clause 28. The method of Clause 24, wherein the first and second carrier fluids have a same composition.
Clause 29. The method of Clause 24, wherein the mass ratio of the particulates to the thermoplastic polymer is about 1:1 to about 1:2.
Clause 30. The method of Clause 24, wherein at least some of the particulates have an average effective diameter of about 5 µm or greater.
Clause 31. The method of Clause 24, wherein at least some of the particulates have an aspect ratio of about 1:1 to about 30:1.
Clause 32. The method of Clause 24, wherein a shape of at least some of the particulates is characterized as a sphere, an ellipsoid, a fiber, a polyhedron, an asteroid, a platelet, a flake, or a hybrid thereof.
Clause 33. The method of Clause 24, the particulates comprise one or more of: a carbon fiber, a metal fiber, a silicon nitride fiber, a ceramic fiber, a glass bead, a hollow glass sphere, a carbon flake, or any combination thereof.
Clause 34. The method of Clause 24, wherein the polymer coated particulates have a density of 1 about 0.5 g/cm³ to about 10 g/cm³.
Clause 35. The method of Clause 24, wherein the emulsion stabilizer is present in the mixture, and wherein the emulsion stabilizer is present in the mixture is about 1 wt% to about 50 wt% based on a total weight of the thermoplastic polymer in the mixture.
Clause 36. The method of Clause 35, wherein the emulsion stabilizer comprises metal oxide particles.
Clause 37. The method of Clause 24, wherein the thermoplastic polymer comprises one or more of: a thermoplastic polyolefin, a polyamide, a polyurethane, a polyacetal, a polycarbonate, polybutylene terephthalate (PBT), polyethylene terephthalate (PET), polyethylene naphthalate (PEN), polytrimethylene terephthalate (PTT), ethylene vinyl acetate copolymer (EVA), polyhexamethylene terephthalate, a polystyrene, a polyvinyl chloride, a polytetrafluoroethene, a polyester (e.g., polylactic acid), a polyether, a polyether sulfone, a polyetherether ketone, a polyacrylate, a polymethacrylate, a polyimide, acrylonitrile butadiene styrene (ABS), a polyphenylene sulfide, a vinyl polymer, a polyarylene ether, a polyarylene sulfide, a polysulfone, a polyether ketone, a polyamide-imide, a polyetherimide, a polyetherester, a copolymer comprising a polyether block and a polyamide block (PEBA or polyether block amide), a functionalized or nonfunctionalized ethylene/vinyl monomer polymer, a functionalized or nonfunctionalized ethylene/alkyl (meth)acrylate, a functionalized or nonfunctionalized (meth)acrylic acid polymer, a functionalized or nonfunctionalized ethylene/vinyl monomer/alkyl (meth)acrylate terpolymer, an ethylene/vinyl monomer/carbonyl terpolymer, an ethylene/alkyl (meth)acrylate/carbonyl terpolymer, a methylmethacrylate-butadiene-styrene (MBS)-type core-shell polymer, a polystyrene-block-polybutadiene-block-poly(methyl methacrylate) (SBM) block terpolymer, a chlorinated or chlorosulphonated polyethylene, polyvinylidene fluoride (PVDF), a phenolic resin, poly(ethylene/vinyl acetate), a polybutadiene, a polyisoprene, a styrenic block copolymer, a polyacrylonitrile, and a silicone.
Clause 38. The method of Clause 24, wherein the thermoplastic polymer comprises polyamide (e.g., PA12, PA6, PA11, or any combination thereof).
Clause 39. The method of Clause 24, wherein the thermoplastic polymer comprises polyolefin (e.g., polyethylene, polypropylene, or any combination thereof).
Clause 40. The method of Clause 24, wherein the thermoplastic polymer comprises polyethylene terephthalate.
Clause 41. The method of Clause 24, wherein the thermoplastic polymer comprises polymethylmethacrylate.
Clause 42. The method of Clause 24, wherein the thermoplastic polymer comprises aromatic polyamide.
Clause 43. The method of Clause 24, wherein the thermoplastic polymer comprises polystyrene.
Clause 44. The method of Clause 24, wherein the thermoplastic polymer comprises polycarbonate.
Clause 45. The method of Clause 24, wherein the thermoplastic polymer comprises polyurethane.
Clause 46. A composition comprising: a polymer coated particulate comprising the particulate having a thermoplastic polymer coating and an emulsion stabilizer coating at least a portion of a surface of the thermoplastic polymer coating.
Clause 47. The composition of Clause 46, wherein at least some of the emulsion stabilizer is embedded in the thermoplastic polymer coating.
Clause 48. The composition of Clause 46, wherein the thermoplastic polymer coating has a thickness of about 0.01 µm to about 10 µm.
Clause 49. The composition of Clause 46, wherein the polymer coated particulates have a density of 1.50 g/cm³ to about 1.70 g/cm³.
Clause 50. The composition of Clause 46, wherein a weight ratio of the thermoplastic polymer to the particulates in the polymer coated particulate is about 1:0.1 to about 1:5.
Clause 51. The composition of Clause 46, wherein a weight ratio of the thermoplastic polymer to the emulsion stabilizer in the polymer coated particulate is about 2:1 to about 20:1.
Clause 52. The composition of Clause 46, wherein the emulsion stabilizer comprises metal oxide particles.
Clause 53. The composition of Clause 46, wherein the thermoplastic polymer comprises one or more of: a thermoplastic polyolefin, a polyamide, a polyurethane, a polyacetal, a polycarbonate, polybutylene terephthalate (PBT), polyethylene terephthalate (PET), polyethylene naphthalate (PEN), polytrimethylene terephthalate (PTT), ethylene vinyl acetate copolymer (EVA), polyhexamethylene terephthalate, a polystyrene, a polyvinyl chloride, a polytetrafluoroethene, a polyester (e.g., polylactic acid), a polyether, a polyether sulfone, a polyetherether ketone, a polyacrylate, a polymethacrylate, a polyimide, acrylonitrile butadiene styrene (ABS), a polyphenylene sulfide, a vinyl polymer, a polyarylene ether, a polyarylene sulfide, a polysulfone, a polyether ketone, a polyamide-imide, a polyetherimide, a polyetherester, a copolymer comprising a polyether block and a polyamide block (PEBA or polyether block amide), a functionalized or nonfunctionalized ethylene/vinyl monomer polymer, a functionalized or nonfunctionalized ethylene/alkyl (meth)acrylate, a functionalized or nonfunctionalized (meth)acrylic acid polymer, a functionalized or nonfunctionalized ethylene/vinyl monomer/alkyl (meth)acrylate terpolymer, an ethylene/vinyl monomer/carbonyl terpolymer, an ethylene/alkyl (meth)acrylate/carbonyl terpolymer, a methylmethacrylate-butadiene-styrene (MBS)-type core-shell polymer, a polystyrene-block-polybutadiene-block-poly(methyl methacrylate) (SBM) block terpolymer, a chlorinated or chlorosulphonated polyethylene, polyvinylidene fluoride (PVDF), a phenolic resin, poly(ethylene/vinyl acetate), a polybutadiene, a polyisoprene, a styrenic block copolymer, a polyacrylonitrile, and a silicone.
Clause 54. The composition of Clause 46, wherein the thermoplastic polymer comprises polyamide (e.g., PA12, PA6, PA11, or any combination thereof).
Clause 55. The composition of Clause 46, wherein the thermoplastic polymer comprises polyolefin (e.g., polyethylene, polypropylene, or any combination thereof).
Clause 56. The composition of Clause 46, wherein the thermoplastic polymer comprises polyethylene terephthalate.
Clause 57. The composition of Clause 46, wherein the thermoplastic polymer comprises polymethylmethacrylate.
Clause 58. The composition of Clause 46, wherein the thermoplastic polymer comprises aromatic polyamide.
Clause 59. The composition of Clause 46, wherein the thermoplastic polymer comprises polystyrene.
Clause 60. The composition of Clause 46, wherein the thermoplastic polymer comprises polycarbonate.
Clause 61. The composition of Clause 46, wherein the thermoplastic polymer comprises polyurethane.
Clause 62. A method comprising: depositing polymer coated particulates of Clause 42 and optionally polymer particles onto a surface; and once deposited, exposing at least a portion of the polymer coated particulates and polymer particles, when included, to a laser to fuse the polymer coated particulates and polymer particles, when included, and form a consolidated body.
Clause 63. The method of Clause 62, wherein the consolidated body has a void percentage of about 5% or less.

Unless otherwise indicated, all numbers expressing quantities of ingredients, properties such as molecular weight, reaction conditions, and so forth used in the present specification and associated claims are to be understood as being modified in all instances by the term "about." Accordingly, unless indicated to the contrary, the numerical parameters set forth in the following specification and attached claims are approximations that may vary depending upon the desired properties sought to be obtained by the incarnations of the present inventions. At the very least, and not as an attempt to limit the application of the doctrine of equivalents to the scope of the claim, each numerical parameter should at least be construed in light of the number of reported significant digits and by applying ordinary rounding techniques.

One or more illustrative incarnations incorporating one or more invention elements are presented herein. Not all features of a physical implementation are described or shown in this application for the sake of clarity. It is understood that in the development of a physical embodiment incorporating one or more elements of the present invention, numerous implementation-specific decisions must be made to achieve the developer's goals, such as compliance with system-related, business-related, government-related and other constraints, which vary by implementation and from time to time. While a developer's efforts might be time-consuming, such efforts would be, nevertheless, a routine undertaking for those of ordinary skill in the art and having benefit of this disclosure.

While compositions and methods are described herein in terms of "comprising" various components or steps, the compositions and methods can also "consist essentially of" or "consist of' the various components and steps.

To facilitate a better understanding of the embodiments of the present invention, the following examples of preferred or representative embodiments are given. In no way should the following examples be read to limit, or to define, the scope of the invention.

### EXAMPLES

Sample 1 - The Haake Rheomix was set to 230°C, 25 g of PDMS oil and 20 g of polyamide 12 (PA12) were added to the mixer and mixed together for 5 minutes to form particles in oil. Then, 2 g of ZOLTEK^{™} PX30 carbon fiber (carbon fibers with 1.79 g/cm³ density, available from Zoltek) was added to the PDMS/PA12 mixture and mixed for another 10 minutes before discharging into a pan followed by 3 washes of 200 mL ethyl acetate. The powder was then dried to remove residual solvent. Polymer coated carbon fibers were not produced.
Sample 2 - The Haake Rheomix was set to 230°C, 25 g of PDMS oil and 20 g of PA12 were added to the mixer and mixed together for 5 minutes to form particles in oil. Then, 2 g of ZOLTEK^{™} PX30 carbon fiber followed by 0.8 g R812S silica were added to the PDMS/PA12 mixture and mixed for another 10 minutes before discharging into a pan followed by 3 washes of 200 mL ethyl acetate. The powder was then dried to remove residual solvent.
Sample 3 - The Haake Rheomix was set to 230°C, 30 g of PDMS oil and 10 g of PA12 were added to the mixer and mixed together for 5 minutes to form particles in oil. Then, 6 g of ZOLTEK^{™} PX30 carbon fiber followed by 0.4 g R812S silica were added to the PDMS/PA12 mixture and mixed for another 10 minutes before discharging into a pan followed by 3 washes of 200 mL ethyl acetate. The powder was then dried to remove residual solvent.
Sample 4 - The Haake Rheomix was set to 230°C, 30 g of PDMS oil and 10 g of PA12 were added to the mixer and mixed together for 5 minutes to form particles in oil. Then, 10 g of ZOLTEK^{™} PX30 carbon fiber followed by 0.4 g R812S silica were added to the PDMS/PA12 mixture and mixed for another 10 minutes before discharging into a pan followed by 3 washes of 200 mL ethyl acetate. The powder was then dried to remove residual solvent. The resultant particles had a density of 1.41 g/cm³. Density was determined using an AccuPyc 1330 Pycnometer, which determines density and volume by measuring the pressure change of helium in a calibrated volume.
Sample 5 - The Haake Rheomix was set to 230°C, 30 g of PDMS oil and 10 g of PA12 were added to the mixer followed by 0.8 g R812S silica and mixed together for 5 minutes to form particles in oil. Then, 6 g of ZOLTEK^{™} PX30 carbon fiber was added to the PDMS/PA12 mixture and mixed for another 10 minutes before discharging into a pan followed by 3 washes of 200 mL ethyl acetate. The powder was then dried to remove residual solvent. The resultant particles had a density of 1.44 g/cm³.

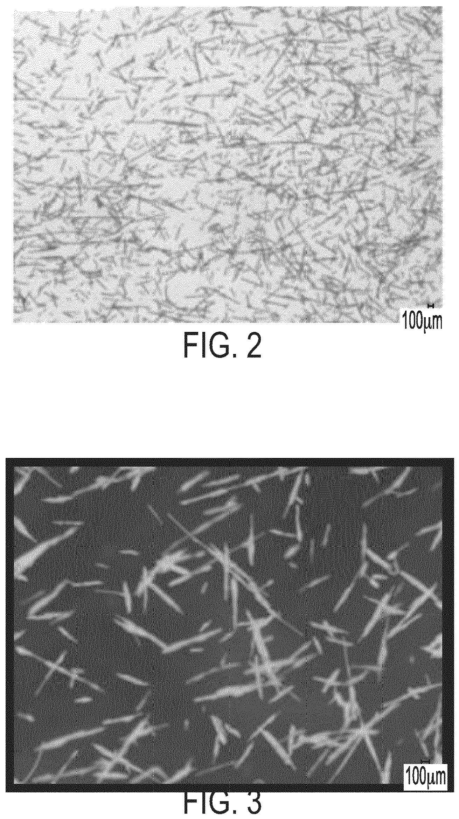

The ZOLTEK^{™} PX30 carbon fibers and Samples 1-5 were dispersed in PDMS oil, allowed to settle, and viewed under an optical microscope. FIGS. 2 and 3 shows optical micrographs for the ZOLTEK^{™} PX30 carbon fibers and Sample 2, respectively. Samples 3-5 looked similar to Sample 2 under optical microscopy. The polymer coated carbon fibers were agglomerated but still reasonably sized for SLS printing processes.

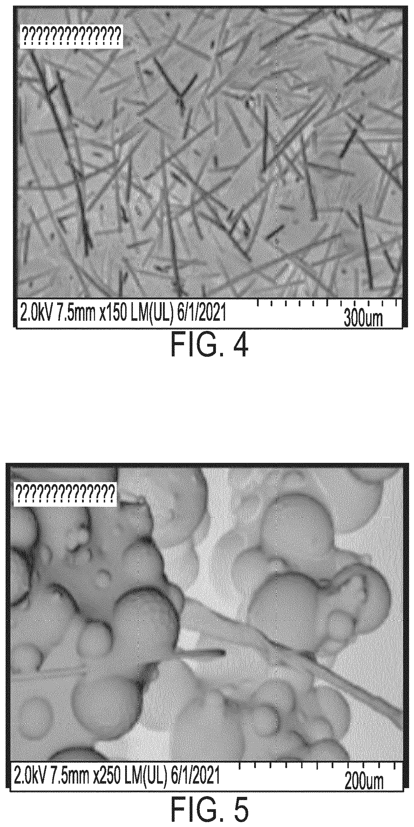

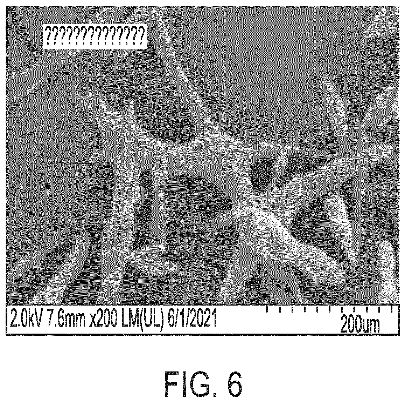

FIGS. 4-6 include scanning electron micrograph (SEM) images of the ZOLTEK^{™} PX30 carbon fiber raw material, Sample 1, and Sample 2 (sieved).

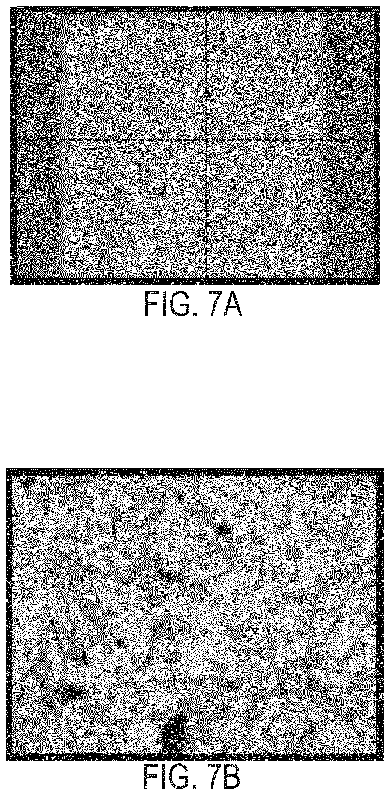

Sample 2 was tested for SLS printing using a Sharebot SnowWhite SLS printer. The temperature of the bed was set to 138°C, with a laser rate set at 45,000 points per second (1 point per second is about 0.05 mm/s), and laser power set at 30%. The sintered articles was a single layer square measuring approximately 30 mm by 30 mm. FIGS. 7A-B show optical images of the single layer article at 12x and 160x magnifications, respectively. The pile height of the single layer article was measured by the Keyence VR5200 Wide-Area 3D Measurement System Head. The l x w (yx) was measured to be 31.3 mm by 31.5 mm. The thickness of the sintered layer was about 1.4 mm thick. For comparison, a single layer article prepared with PA12 particles is usually between 0.2 mm to 0.3 mm in thickness.

Samples 6-14 were prepared using the conditions of Table 1. The Haake was heated to 230°C for all the experiments and 50% of PDMS (30,000 cSt for Samples 6-8 and 60,000 cSt for Samples 9-14) was loaded into the Haake. The PA12 pellets were added into the PDMS oil, and the mixer was started at a high RPM. The R812S silica was added dry to the polymer/oil mixture and mixed for 5 minutes to create particles. The carbon fiber was predispersed into the remaining 50% oil and added to the PA12/PDMS/R812S mixture. The carbon fiber/PA12 was mixed in the Haake for 10 minutes to coat the fibers and then discharged onto dry ice. The cooled carbon fiber/PA12 paste was then washed with ethyl acetate to isolate the coated carbon fiber from the polymer fines and dried.

**Table 1**

| Sample | Carbon Fiber Predispersion | | Final Dispersion | | |
|---|---|---|---|---|---|
| | Carbon Fiber (g) | PDMS (g) | PA12:CF weight ratio | PA12: R812S weight ratio | Percent Solids (%) |
| 6 | 5 | 20 | 1:1 | 10:1 | 20.00 |
| 7 | 7 | 20 | 0.7:1 | 10:1 | 23.08 |
| 8 | 5 | 20 | 1:1 | 6.66: 1 | 20.00 |
| 9 | 5 | 20 | 1:1 | 10:1 | 20.00 |
| 10 | 2 | 20 | 1:1 | 5:1 | 9.09 |
| 11 | 2 | 20 | 0.5:1 | 5:1 | 698 |
| 12 | 5 | 20 | 0.5:1 | 5:1 | 15.79 |
| 13 | 5 | 20 | 1:1 | 5:1 | 20.00 |
| 14 | 5 | 15 | 2:1 | 5:1 | 33.33 |

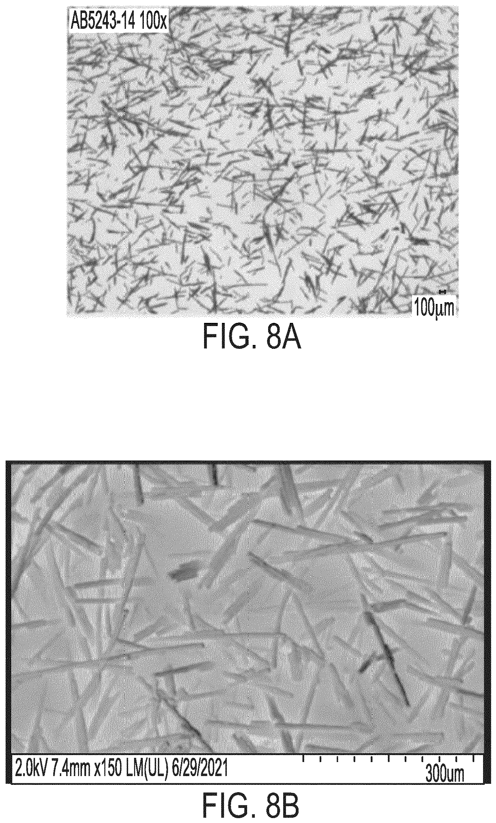

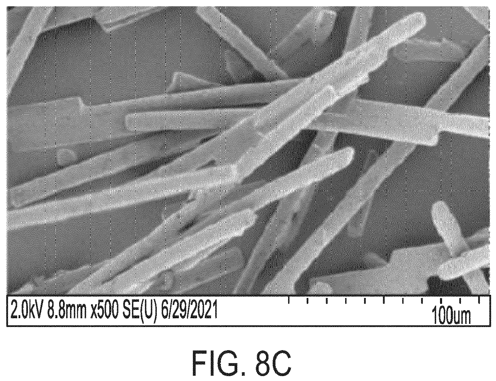

Optical and SEM images of the resultant polymer coated carbon fibers showed less agglomeration and more individual polymer coated carbon fibers or small agglomerations thereof as compared to Samples 2-5 (see FIG. 8A for an optical image and FIG. 8B-C for SEM images of Sample 14).

Samples 2, 13, and 14 were tested for SLS printing using a Sharebot SnowWhite SLS printer at 138°C, 30% laser power (maximum laser power is 14 W), and 45,000 points per second scan rate (see Table 2 for additional conditions). The sintered articles was a single layer square measuring approximately 30 mm by 30 mm.

**Table 2**

| Sample | Observation | Length (mm) | Mass After |
|---|---|---|---|
| | | Width (mm) | Removal (g) |
| 2 | sintered, some powder stays in bed when complete | 31.3 | 0.0826 |
| | | 31.5 | |
| 13 | sintered, all powder removed from bed when complete | 32.0 | 0.1756 |
| | | 32.1 | |
| 14 | sintered, all powder removed from bed when complete | 32.2 | 0.1951 |
| | | 32.1 | |

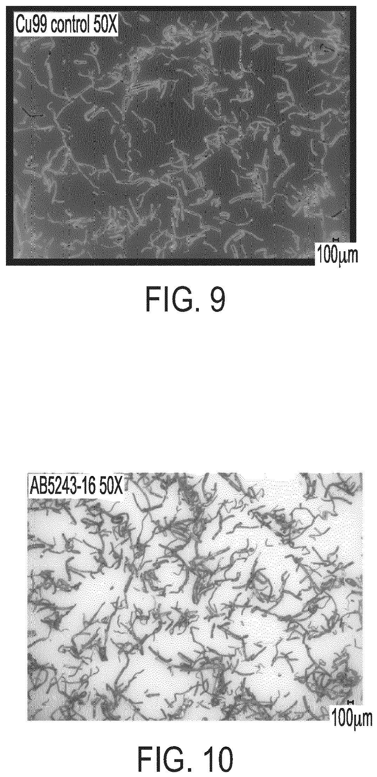

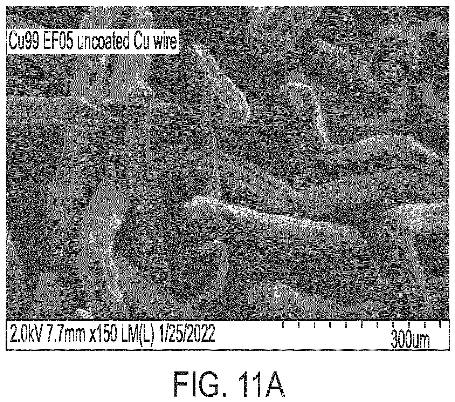

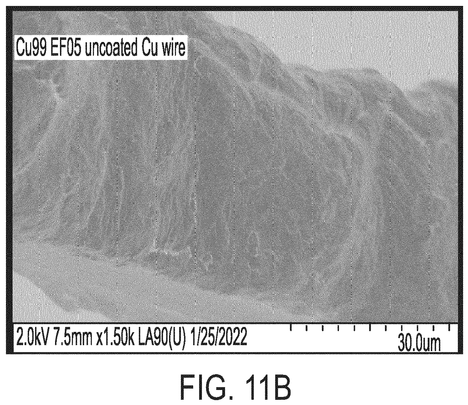

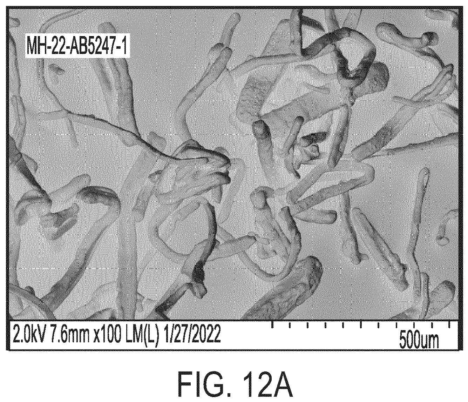

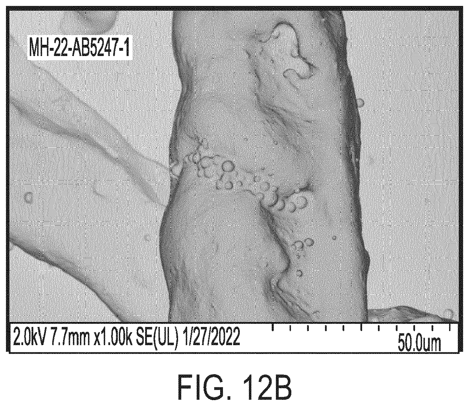

Sample 15 - 30 g of 60,000 cSt PDMS, 10 g of PA12, and 2 g of R812S silica were added to a Haake mixer and mixed for about 5 minutes. Then, 25 g of STAX copper fibers were slowly added to the mixer while mixing. After all the copper fibers were added, the mixing continued for about 10 minutes. The contents of the mixer were discharged over dry ice to solidify the polymer. The resultant solids were washed several times with an organic solvent, dried, and imaged. FIGS. 9 and 10 are the optical images of the copper fibers uncoated and coated, respectively. FIGS. 11A-B and 12A-B are the SEM images of the copper fibers uncoated and coated, respectively.

The uncoated starting material copper fibers had a density of about 8.9 g/cm³ while the coated copper fibers had a density of about 7.6 g/cm³.

Therefore, the present invention is well adapted to attain the ends and advantages mentioned as well as those that are inherent therein. The particular examples and configurations disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative examples disclosed above may be altered, combined, or modified and all such variations are considered within the scope and spirit of the present invention. The invention illustratively disclosed herein suitably may be practiced in the absence of any element that is not specifically disclosed herein and/or any optional element disclosed herein. While compositions and methods are described in terms of "comprising," "containing," or "including" various components or steps, the compositions and methods can also "consist essentially of" or "consist of' the various components and steps. All numbers and ranges disclosed above may vary by some amount. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces.

## Claims

1. A method comprising:
mixing a mixture comprising: a carrier fluid, particulates, a thermoplastic polymer, and optionally an emulsion stabilizer at a temperature at or greater than a melting point or softening temperature of the thermoplastic polymer, wherein a mass ratio of the particulates to the thermoplastic polymer is about 1:0.1 to about 1:5;
cooling the mixture to below the melting point or softening temperature to form polymer coated particulates; and
separating the polymer coated particulates from the carrier fluid.

2. The method of claim 1, wherein the mass ratio of the particulates to the thermoplastic polymer is about 1:1 to about 1:2.

3. The method of claim 1, wherein at least some of the particulates have an average effective diameter of about 5 µm or greater.

4. The method of claim 1, wherein at least some of the particulates have an aspect ratio of about 1:1 to about 30:1.

5. The method of claim 1, the particulates comprise one or more of: a carbon fiber, a metal fiber, a silicon nitride fiber, a ceramic fiber, a glass bead, a hollow glass sphere, a carbon flake, or any combination thereof.

6. The method of claim 1 further comprising:
dispersing the particulates in a first portion of the carrier fluid to yield a first dispersion;
dispersing a polymer melt comprising the thermoplastic polymer in a second portion of the carrier fluid to yield a second dispersion; and
mixing the first and second dispersions.

7. The method of claim 6, wherein the second dispersion further comprise the emulsion stabilizer.

8. The method of claim 1 further comprising:
dispersing the particulates in the carrier fluid to yield a dispersion;
heating the dispersion to the temperature at or greater than a melting point or softening temperature of the thermoplastic polymer; and
adding the thermoplastic polymer and optionally the emulsion stabilizers to the heated dispersion.

9. The method of claim 1, wherein the emulsion stabilizer is present in the mixture, and wherein the emulsion stabilizer is present in the mixture is about 1 wt% to about 50 wt% based on a total weight of the thermoplastic polymer in the mixture.

10. A method comprising:
dispersing particulates in a first carrier fluid to yield a first dispersion;
dispersing a thermoplastic polymer and optionally an emulsion stabilizer in a second carrier fluid at a temperature at or greater than a melting point or softening temperature of the thermoplastic polymer to yield a second dispersion; and
mixing the first and second dispersions to yield a mixture;
cooling the mixture to below the melting point or softening temperature to form polymer coated particulates; and
separating the polymer coated particulates from the first and second carrier fluid.

11. The method of claim 10, wherein the thermoplastic polymer of the second dispersion is present in the second dispersion as a molten and/or softened thermoplastic polymer particle.

12. The method of claim 10, wherein the second dispersion is produced before the first dispersion.

13. The method of claim 10, wherein the first and second carrier fluids are different and miscible.

14. The method of claim 10, the particulates comprise one or more of: a carbon fiber, a metal fiber, a silicon nitride fiber, a ceramic fiber, a glass bead, a hollow glass sphere, a carbon flake, or any combination thereof.

15. A composition comprising:
a polymer coated particulate comprising the particulate having a thermoplastic polymer coating and an emulsion stabilizer coating at least a portion of a surface of the thermoplastic polymer coating.

16. The composition of claim 15, wherein at least some of the emulsion stabilizer is embedded in the thermoplastic polymer coating.

17. The composition of claim 15, wherein the thermoplastic polymer coating has a thickness of about 0.01 µm to about 10 µm.

18. The composition of claim 15, wherein a weight ratio of the thermoplastic polymer to the particulates in the polymer coated particulate is about 1:0.1 to about 1:5.

19. The composition of claim 15, wherein a weight ratio of the thermoplastic polymer to the emulsion stabilizer in the polymer coated particulate is about 2:1 to about 20:1.

20. A method comprising:
depositing polymer coated particulates of claim 15 and optionally polymer particles onto a surface; and
once deposited, exposing at least a portion of the polymer coated particulates and polymer particles, when included, to a laser to fuse the polymer coated particulates and polymer particles, when included, and form a consolidated body.
